# EUROPEAN PATENT SPECIFICATION

(11) **EP 0 739 526 B1**
(45) Date of publication and mention of the grant of the patent: **19.12.2001**
(21) Application number: 95935472.1
(22) Date of filing: 25.10.1995
(51) Int. Cl.: G07F 7/08, G07F 19/00, G06F 17/60

(54) **REAL TIME TELE-PAYMENT SYSTEM**
ECHTZEIT-TELEBEZAHLSYSTEM
SYSTEME DE TELEPAIEMENT EN TEMPS REEL

(30) Priority: 28.10.1994 FI 945075
(43) Date of publication of application: 30.10.1996
(60) Divisional application: 01114153.8
(73) Proprietor: Vazvan, Behruz, 00420 Helsinki (FI)
(72) Inventor: Vazvan, Behruz, 00420 Helsinki (FI)
(74) Representative: Rosenich, Paul
(86) International application number: FI9500591
(87) International publication number: WO9613814

(56) References cited:
- WO-A-94/11849

## Description

This invention is a real time mobile payment system that relates to the payments and bills of the mobile users and providing the mobile users with the information about their accounts, account balance, the statement of account, or the movement on the account and other required messages in a real time basis by using their mobile terminals under any wireless telecommunication system.

### BACKGROUND OF THE INVENTION

There are several mechanical and electronical payment systems for retail business operations like, for example, what is introduced by US patent US-A-5 202 825, in which a hand-held data terminal generates a record of purchases made by a customer for charging a customer in accordance with customer-indicated payment preferences. In these systems the waiter sends by use of a data terminal the customer's order to a customer service station which is a typical cash register based in the restaurant. These systems reduce the time requirements for processing customers at check-out counters in comparison with those of more traditional check-out procedures of the recent past. These systems are only for sending the customer order to the cash register in the retail business.

On the other hand in the fixed telecommunication networks a user (subscriber) can be connected from his personal computer to his/her bank via telephone lines and thereby pay his/her bills. In such systems user must use a data modem between his/her computer and the telephone wire. Another disadvantage of such systems is that in order to pay his/her bills, user must have access to his own personal computer connected through his telephone line to the fixed telephone infrastructure, therefore user mobility in such systems is completely limited. On the other hand in the existing telephone banks when a telebank is called, the computer identifying the DTMF-voice frequency signals available through the telephone network i.e. the central voice applications platform (the CVAP) answers and the caller talks with the CVAP by pushing certain keys suggested by a predetermined program. A considerable problem in such systems is that no payment or any equivalent value or code is sent from the user terminal to the central system for charging the users in real time for the connection time or data messaging. Moreover, no payment or its equivalent value is transferred by the user's terminal to an account for user's mobile bills or commerce. Another considerable problem in such systems is that no data is visualized in user's mobile terminal to allow user to input or select an item, and no real time data messaging technique is adapted for users' bill payments and banking issues but users must listen to an instruction, during a call, and then by pushing certain keys pay a bill without seeing any data, and then cut off the connection which also is not charged in real time.

The published WO 94/11849 discloses a payment system which uses the GSM-network user's A-number for user authentication when a call is set up to service providers. In order to register the telephone to the network the user is first authenticated in the authentication center of the GSM network when he enters his PIN-code, as is well known. Then the payer selects the transmitter of the transaction, e.g. a bank, a credit company, based on which a call is placed to the transmitter's payment system. In the call set-up, the subscriber is identified using the subscriber A-number. The caller's A-number identity is used to administrate the user's rights and to connect the user to the service. According to the publication in telephone (i.e. voice) banking services the terminal is a standard GSM telephone. According to the description and claims of the publication when a telephone alone is used an audio connection is taken from the telephone for banking services. In data-based banking services the terminal is a normal computer linked to the GSM telephone e.g. Motorola MicroTac-phone serial port by means of cable. No data is controlled neither displayed by said telephone itself. The banking services are handled by calling transmitter's payment system, forming a connection with said system, giving the amount to be paid, confirming the amount, approving the payment, giving the payment an identification number, producing a receipt of the transaction to the customer, recording the transaction in the seller terminal and in the payment system, and after that charging the telephone connection time, and cutting off the connection. As it is clear to a person skilled in the art the publication presents the method of the GSM system where subscriber's A-number is used to authenticate a user in the call set-up in accordance with the GSM system standards.

A considerable problem in the method and system explained in WO 94/11849 is that no data is controlled by said telephone neither said data is displayed on the screen of said telephone but for data-based banking a personal computer is used which is connected to a standard GSM-telephone's serial port. Therefore, for data services, the user terminal is comprised of a normal personal computer connected by cable to a GSM telephone whereby a data call is made to the bank. The telephone disclosure of said publication is not arranged with means to control and display required data messages for bill payment transaction and mobile commerce, neither a method for securing said messages. Another considerable problem in said system is that no transaction is encrypted end to end neither digital signatures techniques used for user authentication and securing the transactions. The publication does not provide a wireless and modemless data messaging solution neither methods for improving such technologies, as it is provided by the present invention. Furthermore, the method and system of said publication dose not disclose a user authentication method based on utilizing short data messaging. The publication does not specify a specific applications and client module for running banking, commerce and other applications and securing the messages, as the present invention provides. Moreover, in the method and system of said publication no smart card or accounts are arranged to be charged in real time for users communications or service being in use, neither any payment is transferred from said terminal to a user account. According to the system of publication WO 94/11849 the telephone connection is only charged using the traditional billing systems and after the transaction has been completed and a receipt has been produced for the customer. Therefore, problems of bad debit are not solved by the invention of WO 94/11849 because the user account is not charged in real time. Other inefficiencies of the system presented in said publication is that it does not provide an interactive real time messaging system and method for running applications and requesting information, such as account information or any other messages by means of a mobile terminal and by sending request messages, that are structured and displayed in said mobile terminal in a user friendly format, to the remote computing stations for retrieving the information required and displaying in user's mobile terminal. The publication presents the GSM system's authentication method wherein the subscriber's A-number is used to authenticate the subscriber in a call set-up, while in the present invention messages are also encrypted and secured using any security algorithms and any users codes to securely identify the users and encrypt messages.

Mobile terminals have limited resources that should be used efficiently. Therefore for data services terminals and services should be specifically designed to allow introduction of services via resource limited mobile terminals. In GSM and other mobile systems the standard data communication is designed to be used for one way data transmission using fax devices or personal computers connected by means of cable to a mobile telephone i.e. no data is arranged to be handled and displayed by a mobile terminal neither any cordless means and environment is arranged in connection with user's mobile terminal in order to communicate with other devices without using any cable connections between said terminal and other devices. Furthermore, before this invention the messaging facilities of the existing mobile systems and terminals, such as GSM, were limited to the basic SMS techniques so that the user was allowed to send and receive only to/from other mobile users at most a 160 characters short message each time. Another problem with the basic SMS services is that the messages sent, received or displayed are not structured in an user friendly format, to present inquiries, menus enabling users to input or select an item, but the messages are communicated using standard GSM terminals without any especial design and operations. While SMS is a point-to-point short message service it is not arranged to carry out messaging in real time but message formats are specified for one way communication without taking into account the need for possible responses, results of queries etc. Furthermore, before the present invention short data messaging was not utilized and adapted for bill payment and mobile commerce. The basic SMS is not arranged for banking, retail and commerce businesses neither to provide interactive services. Before this invention mobile terminals and smart cards were not arranged with means for digitally encryption and decryption of messages to provide secure messaging between a mobile user and a remote computing station. Furthermore, smart cards (SIM) were not arranged with means to control a user interface for controllable menus and inquiries, for real time sending and retrieving information and performing mobile commerce.

There continues to exist a need to further improve the efficiencies of payment and messaging systems. The system and method according to the subject invention provides preferable solutions to the above mentioned problems.

### ADVANTAGES OF THE INVENTION

A solution to the posed problem of the invention is defined in the independent claims. Preferred embodiments and other features of the invention are defined in the dependent claims. In one embodiment of the present invention a real time payment system and method is provided for charging the mobile users in real time, as the time and call/service is going on, for their mobile bills. In another embodiment of this invention a system and method is provided to allow users of mobile terminals to display, send and receive bills, payments, account information, structured inquiries, menus, and other messages (e.g. 11), for banking, commerce, retail and the like businesses, to/from computing stations via wireless messaging means of a digital mobile or cordless system without using any data modem in connection with said terminal. In one embodiment this invention provides a generic message format making short messaging a real time application messaging system. According to one embodiment of the present invention the user mobile terminal is arranged with a client module that communicates with a computing station over a digital mobile or cordless communication system to allow service providers, commerce, banks, retail and the like businesses to provide their services to users in a user friendly manner. In the present invention the users are allowed to set up interactive communications with computing stations by sending request codes and messages that are structured and displayed in an efficient and user friendly format 11, a menu, to allow a user to select and input an item, send a message, a code (e.g. 33) to said computing station wherein the information required, e.g. the statement of an account, bills, commerce related messages, are retrieved in real time and sent to said users' mobile terminals. A structured user friendly menu 11, 33, an inquiry is displayed for user that allows user to select, input, and activate a required item and whereupon communicate via a wireless system with a remote computing station, send and receive messages. Another aspect of the present invention is that user is allowed by means of his mobile terminal to send and receive the required amount of payment, to send the payment to the payee's account or terminal, to transfer the payment from a smart card, mobile payment part, to a payee's account or terminal and to store the payment in said smart card (SIM or equivalent). Yet, in another embodiment of the present invention messages communicated between said mobile terminal, mobile payment part and computing stations are secured and encrypted using security algorithms and any necessary codes to provide a complete secure system. In another embodiment of the present invention a wireless messaging communication system is provided wherein the users' mobile terminal, a computing station and other terminals are allowed to send and receive long data information such as account statements via short messaging means. In this invention the user mobile terminal and the computing stations are further arranged with means to combine short messages or divide long data information to several parts, and to send them to a terminating system or terminal enabling said terminal to control and structure said messages and display said messages and data information for user through a display of said terminal. Yet, another advantage of this invention is that the user terminal is arranged to operate both as a digital mobile terminal via digital mobile networks and as a digital cordless terminal via a digital cordless system (e.g. a restaurant's, a shop's etc. cordless system). According to another aspect of this invention said user mobile terminal and smart card (SIM) are arranged to display, receive, send, store and control at least one structured inquiry or menu 11, 33 allowing said user to select an item, input or accept an item wherein said inquiry or menu in one embodiment has at least one question and answering field. According to another embodiment of this invention a smart card (SIM), operable in a mobile terminal, comprises controlling means and means to secure, send, receive, and store short data messages, menus, inquiries and means to allow the user to select and input an item and whereby to set up real time interactive wireless and modemless messaging through a user mobile terminal with at least one computing station. Other preferred embodiments of the invention are defined in claims of this invention.

### DESCRIPTION OF THE INVENTION

In order to serve such current needs, the present invention provides a new and unique mobile payment and messaging system. In the inventive system a mobile terminal can be used in order to pay bills or transfer money or request information, for example account information. Certain features of the invention are intended as an expansion of value-added services of currently existing mobile communications systems. This invention addresses needs created by users mobility. For example, suppose that you are traveling and you want to pay a certain bill or transfer some amount of money to a person's account but you do not have time for going to the bank or the bank may be closed and you may neither have access to your personal computer (which can be connected to the bank via telephone wire). This invention provides you the possibility to pay your bills in an convenient and user friendly way, by using your mobile terminal while you are in move, regardless of weather the banks are closed or not, regardless of weather it is night or weekend etc. This invention also provides the retail businesses (for example restaurants, shops, etc. and other service providers) the possibility to charge their customers, via mobile telecommunication networks, by using their mobile terminals. For example, a waiter in a restaurant, after having entered the amount of payment or the customer's information (like account number etc.) to his/her mobile terminal sends the payment information to the inventive computing station. In the computing station either the customer's account can be charged or the payment amount received from the waiter's mobile terminal can be transferred to the restaurant's account. The most important advantage gained by the inventive system is that all mobile telephone users (subscribers etc.) can pay their bills by using their mobile telephones (in which the inventive mobile payment part is included) and user identity or codes, without requiring any data modem, personal computer, and conventional debit or credit cards etc. In this invention the user identification module and user identity and codes can function as the user's credit card enabling secure payment transactions and messaging.

By implementing the inventive mobile payment system a mobile user (subscriber etc.) can pay all his/her bills and handle all his/her banking issues where ever under the coverage of a mobile communications network. These and other improvements and advantages are realized by providing a system, a method, a mobile terminal (including the inventive mobile payment part) and a computing station. The present invention will now be described by way of examples with reference to the accompanying drawings, in which:

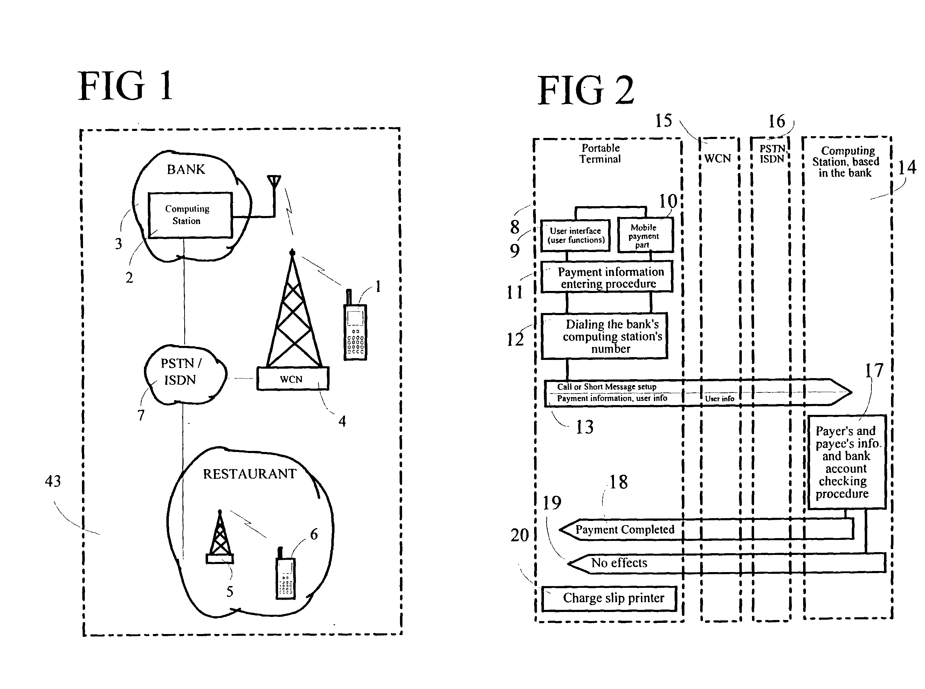

**Fig. 1** is a schematic representation of the inventive Real Time Tele-payment System 43.
**Fig. 2** represents, as an general example, a payment flow diagram between the mobile terminal and the computing station, located in the bank 3.

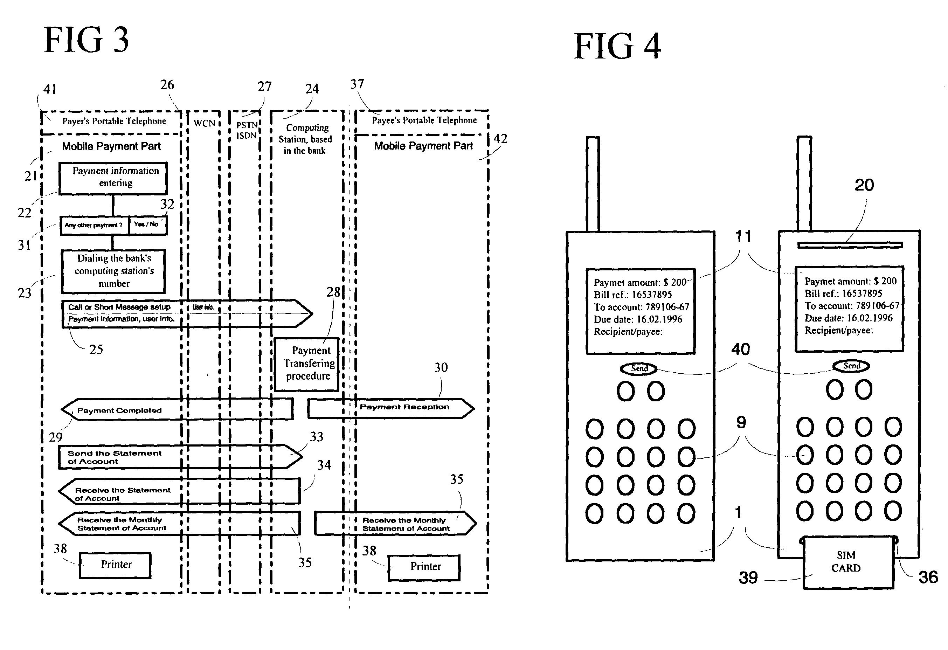

**Fig. 3** represents, as an general example, a payment flow diagram in which a mobile user pays his/her bills or request the statement of account or other information by using his mobile terminal. In this figure also the payee is informed about the reception of a payment.
**Fig. 4** is a schematic representation of two type of mobile terminals: one is a mobile telephone that includes the inventive mobile payment part 10. The other one is a mobile terminal that uses the inventive mobile payment part in a user-friendly smart card 39, includes a charge slip printer and a user-friendly (SIM etc. smart cards) card reader (SIM: Subscriber Identification Module).

When a mobile user wants to pay a bill or transfer money to his account or other, he can enter all information required for payment (like his account number, the payee's account number, payment's due date, bill's reference number, etc.) to his mobile terminal 1 (for example through the keypad). As it is the object of this invention, the user's own account information dose not need to be entered if the computing station 2, can identify the calling party. This needs that the user information (identity) should be confirmed by his/her telephone operator or service provider, for example, in the mobile communications network 4 and then be sent to the bank as a confirmation of user (subscriber) identification. User identity can be sent by user's mobile terminal, telephone operator or service provider to the computing station 2.

Monitoring a calling party's number or information at a receiving terminal is a feature provided by today's digital telephone systems. In this invention, in order to implement such procedure, for example the switching systems at the mobile network side can be used so that only when a user sets up a call or sends a message (by using short messaging means of the mobile communications systems) to the computing station 2 his/her identity can be monitored in the computing station 2 in order to identify who is the calling party. Therefore, in this invention the computing station 2 can receive at least the confirmed user identity via the user's telephone operator or service provider of a mobile communications network 4 in order to identify who is in charge for payment of bills sent by mobile terminal 1. Other required information like passwords or access codes to the user's bank account can be sent by user through his/her mobile terminal 1.

In today's mobile communication systems the user identity, included in his/her SIM card, is checked and confirmed by network 4 every time his/her mobile terminal 1 is turned on and attached to the telephone network 4. In this invention the user identity, transmitted from the mobile terminal 1 to the network 4, can be completely encrypted and secured and also the payment messages between mobile terminal 1 and computing station 2 are quite secured because of: first, the security algorithms used in said digital mobile telecommunication system and mobile telephone, and secondly, because of the user's password or access codes used for payment messages in the inventive mobile payment system. All kind of wireless communications networks can be used in order to communicate the payment and bill messages between the mobile terminal and computing station. For example, if in a restaurant there is a cordless system like DECT (Digital European Cordless Telephony) 5 the user terminal 6 can be connected through such cordless system and PSTN (Public Switched Telephone Network) or ISDN (Integrated Services Digital Network) 7 to the computing station 2.

The payment question-answering procedure between the user and his mobile terminal 8 is entered by using the user interface 9 and received and handled by the inventive mobile payment part 10, 39. The bill and payment information entering procedure 11 is an interactive procedure between the mobile payment part 10 and the user through a user interface 9. Then, the computing station's number is dialed (activated) 12 (either automatically or by user) which after the mobile terminal 8 sends the required information for call set-up to the mobile network 15 and then payment messages 13 to the computing station 14 via the network 15. If the user identity or codes are not sent from the user mobile terminal 8 to the computing station 14, then the mobile network 15 confirms and sends the user identity to the computing station 14 either directly or through the fixed public network 16. The computing station 14 checks the calling party's account and account number of payee (the account to which the payment should be transferred) and then transfers the received amount of payment to the payee's account or terminal or charges the payer's account 17, 28, 30. Then the computing station 14 sends a short message 18 to the mobile terminal 8 indicating "payment completed" or if there is not enough credit (money) in the payer's account a "No effects" message 19 is sent to the user mobile terminal 8, meaning that the payment can not be performed. For retail businesses, mobile terminal includes also a charge slip printer 20. If the mobile terminal receives a "payment completed" command 18, the charge slip printer 20 prints a receipt for the customer. In this invention, for example, for the retail and trading businesses, the customer's SIM (or other smart card) 39 is entered in the card reader 36 of mobile terminal 1 (of a waiter in a restaurant, for example, if user doesn't have his own terminal) temporary in order to pay the bill. The account number of payee (for example account number of the restaurant) can be stored in the memory of his/her mobile terminal in order to reduce the information entering procedure. This means that only the payment amount should be entered to the terminal. After that the payment amount has been entered to the mobile payment part 10 and the computing station's 14 number has been dialed, the mobile network 15 sends the customer's identity, which can be the subscriber identity or a different code (a code different than that of subscriber identity, number etc.) to the computing station 14. The computing station 14 can identify the calling party (the payer) because it can receive the calling party's identity from the network 15 and compare with the calling party's identity based in the computing station 14, when required. Therefore the payment amount received from the mobile terminal 8 is transferred to the payee's account. The user identity sent from the mobile network 15 to the computing station 14 can be different than the user's, identity sent by the mobile terminal 8 to the mobile network 15 but both of these identities can belong to one user (subscriber). Alternatively the payer's, identity or codes, included in his/her (SIM) card 39 or entered to the mobile terminal by using user interface 9, can be sent directly from the mobile terminal 8 to the computing station 14. It should be understood that for the simplicity of the description, messages for outgoing call set-up and incoming call or short messages services procedures are not explained with details since these procedures are already well known in the mobile communications systems.

Following is an example, in which a mobile user pays his/her bills or transfers money to his/her or other person's account, or requests the computing station for statement of account, by using his/her mobile terminal.

First, the payer enters the bill's information 22 (for example: account number of payee, the amount of money which should be transferred, due date of the bill, reference number 11) to the mobile payment part of his/her mobile terminal 41. Then, after activating an OK function by user the number of the computing station 24 is used and the mobile terminal sends the payment information 25 to the computing station 24 via a mobile communications network 26 and a fixed network 27. Then, computing station 24 transfers the amount of payment, on the bill, to the payee's account 28. Then, computing station 24 sends a "Payment Completed" short message 29 to the mobile terminal. If the payee has also a mobile terminal 37, then his/her mobile terminal 42 can receive a "Payment Reception message" 30, from the computing station 24, indicating the amount of payment, the payer and the payment date. However, before dialing (activating) the number of computing station the mobile payment part may ask the payer (the user of mobile terminal) "Any other payment ?" 31. The answer can be respond by activating for example "Yes/No" function 32 or an OK function of the mobile payment part 21. Then the user can enter another bill information to his terminal (mobile payment part) and when all information required has been provided, the required number can be dialed (activated). After this, all bills information (payment messages) are sent to the computing station 24 as explained above. Furthermore, for requesting information such as account balance, the statement of account, or the movement on the account from the computing station 24, there is a code under a user friendly command name such as "send the statement of account" or the like 33. When user selects such a command 33, the mobile payment part 21 sends a message either by setting up a call or by using short message facilities of a mobile communications network 26 to the computing station 24 as a request for account information. Then computing station 24 sends the required account balance or the statement of account 34 to the mobile terminal 41. The computing station 24 is also arranged to send for example a "Monthly Statement of Account" 35, to the mobile terminals 41, 42 for example once or twice per month. Then mobile terminal's printer (38) can print it for the user to be filed as a record, if required.

Following is an example in which the payee (for example a restaurant or a retail seller) has a mobile terminal by which the payer (a customer) can be charged.

Suppose that a customer wants to pay his/her bill in a restaurant for the service he/she has received. The customer can give his/her smart card SIM or the like smart card 39 to the waiter to be entered to the waiter's mobile terminal 6, 8. Then waiter dials (activates) the number of computing station 14, or the number is dialed (activated) automatically after the customer's card 39 has been read by card reader 36 of the waiter's mobile terminal. For example the number of computing station 14 can be stored in the memory of waiter's mobile terminal, and every time a customer's smart card (SIM) is entered to the mobile terminal 1, 8, the terminal automatically contacts the computing station 14. The computing station 14 either transfers the received payment or checks the account information of payer (a customer) and then transfers the transaction amount (the sum on the bill) to the payee's (the restaurant's) account 17. If the payer's account do not have enough credit (money) the mobile terminal 8 may receive a "No effects" message 19, from the computing station or the computing station's operator (e.g. bank) may pay the transaction's amount on behalf of the payer and then later charge the payer or his/her bank for the prepaid transaction. On the other hand if the payer's account information (account number, account identity) is false the computing station 14 may send a "transfer not accepted" message to the payee's mobile terminal, which means that the payer (customer) should pay the amount of transaction in cash as explained in the previous examples. If the mobile terminal receives from the computing station 14 a "payment completed" short message 18, then the charge slip printer 20 prints a receipt for the customer, as explained in the previous example.

It should be considered that in all above-mentioned examples, bill and payment and other messages can be sent and received both by setting up a call or through the short messaging means of the wireless communication networks.

In the current mobile communications systems, like GSM, there is a facility called "Short Message Services, (SMS)". In SMS a mobile telephone user can send a short message to another subscriber without setting up an interactive communication. In order to send the bill, payment and other messages by SMS, the software of SMS installed in the user mobile terminal can be modified so that it can also handle the parameters and/or commands of the inventive mobile payment part. By using the short messaging means of a mobile communications network 15, the bills, payment and other information can be sent and received to/from the computing station. When computing station receives e.g. a bill or payment message 13 via SMS, it also sends a message to the mobile terminal in order to inform it if the payment has been completed 18 or not 19. However, if a user wants to enter and send many payments/bills at once and receive also balance or statement of his/her bank account and the like information from the computing stations, such long message can be divided to smaller parts and then be combined at the mobile terminal or computing station. This means that e.g. each bill information can be sent for example separately through short messaging. This action is transparent to the user of the mobile terminal. For example several bill and payment information can be entered to the user terminal. Then when user selects the "Send" function 40 on the mobile terminal 1, each bill can be sent by one short message in accordance with the short messages' lengths. For example, suppose a short message may not include more than 100 characters. If the bill and payment messages or the statement of account (sent by computing station) or other information needs more (space) than the assumed 100 characters, then such long information is divided into two or several short messages and then is sent one by one or all at once to the mobile terminal or computing station. By utilizing this inventive method, user's mobile terminal can send and receive long data information without using modems or data cards.

In this invention said computing station can send and receive messages via PSTN (Public Switched Telephone Network) and ISDN (Integrated Services Digital Network) and other fixed networks or via only a mobile or cordless communications network. The computing station includes all means for handling, transmitting and receiving payment and banking messages via the wireless networks.

## Claims

1. A real time mobile payment system for bill payment of mobile users and/or providing users with all means for mobile banking, commerce, trading, and sending and receiving information, the system utilizing short message service facilities of at least one mobile wireless communication network or a digital cordless communication system (5) and subscriber/user identity module (SIM or equivalent 10, 21, 39, 42), the system comprising
- at least one mobile terminal (1, 6, 8, 37, 41) using said idendity module (10, 21, 39, 42) and comprising means for entering, transmitting, receiving, handling and displaying (11) of information essentially related but not limited to: the payments of bills of the telephone subscriber or the user of said mobile terminal; transferring of money from the bank account of the subscriber or user to the others accounts; sending and receiving at least payment messages (11, 13, 18, 19, 20, 25, 29, 33, 34, 35) or messages including the account balance, the statement of account, or the movement on the account (33, 34, 35) of the telephone subscriber or the user of the mobile terminal (1, 6, 8, 37, 41) and communicating banking, payment, and commerce related and other required messages (11);
- at least one computing station (2, 14, 24) located in a bank (3) or any other required places, said computing station including means for direct short message communication with said mobile terminal or via messaging means of the communication network (4, 5) and for transferring the amount of payment from the account of mobile terminal's user or telephone subscriber to another account (17, 28), or from a customer's account, whose account information is entered into said mobile terminal, to another account; and/or to receive and send messages about the account balance, the statement of account, or the movement on the account (11, 33, 34, 35) of the mobile terminal's subscriber or user and communicating banking, payment, and commerce related and other required messages (11);
- at least the one mobile wireless communications network (4, 15, 26) or a digital cordless communication system (5) through which said mobile terminal can send and receive to or from said computing station said payment messages and/or at least messages about the account balance, the statement of account, or the movement on the account of said mobile terminal's subscriber or user, and communicating banking, payment, and/or commerce related and other required messages (11).

2. A real time mobile system according to claim 1, **characterized in that** in said system at least bills, banking, commerce and account information and other related messages, menus and inquiries are, as much as necessary, arranged and displayed (11, 33) for user through the screen of said mobile terminal (1, 6) to allow said user to see, accept, select and input an item or any required information and to send and receive said messages to/from said computing stations and other terminals without using any data modem with said mobile terminal, and whereby messages communicated between said mobile terminal (1, 6), smart card (10, 21, 39, 30, 42, mobile payment part) and computing stations (2) are whenever required encrypted and completely secured using a security algorithm and that said system further comprises means for allowing said user using said terminal (1, 6) to have real time interactive messaging with said computing station by sending at least one request code, a message (11, 33) to said computing station, said codes and information (11, 33) are either sent by said computing station to said terminal or accessed by user from said terminal or its smart card's (SIM or equivalent) memory and displayed for user in a structured user friendly format (11, 33), said codes and/or information presented under command names like "statement of account, account balance" (11, 33) or the like, said codes referring to commerce and information units like account balance, statement of account, banking, retail, trading, purchase, bill payment and other required messages, accessible and/or purchasable from/through said computing stations, and means for transmitting said requested information (11, 34) to said terminal.

3. A computing station for at least using in a system according to claims 1 and 2, said computing station (2, 14, 24) further comprises:
means for communicating with user's mobile terminal (1, 6) via a mobile network (4) or via a digital cordless system (5) and all means for wired and/or wireless communications and at least one of:
means for receiving and storing required amount of payments, sent by said mobile terminal (1, 6), to accounts to be used at least for mobile users bills;
means for controlling, sending, receiving, storing, and handling at least one user friendly structured message, an inquiry, a menu (11, 33) allowing said user to select an item, input or accept an item and
send and receive the required information, said inquiry or menu in one embodiment having at least one question and answering field to be answered/entered and/or accepted by user;
means for receiving, controlling and processing, storing, and sending bills, payments, mobile user's account information, account balance, statement of account or the movement on the account and
banking and commerce messages (11, 18, 19, 25, 29, 30, 33, 34, 35) from/to users' mobile terminals, via direct short data messaging (SMS) or via messaging means of a digital mobile wireless (4) or cordless communication system (5) for sending, receiving, handling, and displaying (11) said messages in a user friendly format (11) enabling users to select, accept or input an item and complete a transaction, retrieve account and other required information;
means for encryption and digitally securing messages communicated between said terminals (1, 6), mobile payment part (10, 21, 39, 30, 42) and computing stations, using a security algorithm and any required codes;
means for receiving, storing and checking user identities, said identities alternatively confirmed by a service provider or operator;
users' accounts or means for communicating with said users' bank accounts and means for checking, charging/debiting said accounts (17) or transferring the required payment amounts from an account to other in real time, as the time and a call or service is going on, for payment of mobile users bills;
means for controlling and checking the users accounts in real time and means for informing the users about said accounts situation whenever needed;
means for charging the users' accounts or transferring the payments from an account to other upon receipt of a bill or payment order or acceptance message from said mobile terminal via short data messaging;
means for checking the users accounts in real time or periodically for charging said accounts and/or sending to users' terminals messages related to said account situation;
means for interactive short data messaging communications with user's mobile terminal and
smart card (SIM or equivalent), and means for sending and receiving of payments to/from the user's mobile terminal (25, 28) and smart card, mobile payment part (30, 42) via said mobile or cordless system (4, 5);
means for adapting bills, banking messages, account balance, statement of account and other required data to smaller parts for sending to user's mobile and portable terminals to enable said terminals (1, 6) to receive, process and display (11) said messages without using any data modem in connection with said terminal;
means for combining short data messages and means for dividing and arranging long data information like bills or account information to smaller parts, required number of short messages, said messages sent to the users' terminals via a digital mobile wireless network (4) or digital cordless system (5) in an appropriate order, one by one or all at once, enabling receiving terminals to receive and combine said messages without using any data modem;
means for receiving, storing and sending short data messages, resulted from dividing a longer data information, to/from users' mobile terminals in an appropriate order, one by one or all at once;
means for monitoring users' identities and codes;
means for identifying said users and for communication based on said mobile users identities or different codes sent by said mobile terminal or mobile operator or service provider;
means for notifying received data messages to said user's account or any change made in user accounts, by sending a short message to said user mobile terminal (29, 19);
means for periodically sending of users' account information like account balance or the statement of account (35) and other messages to said user terminal via short data messaging;
means for allowing said user using said terminal (1, 6) to have real time interactive messaging with said computing station by sending at least one request code, a message (11, 33) to said computing station, said codes and information (11, 33) are either sent by said computing station to said terminal or entered by user to said terminal or accessed by user from said terminal or its smart card's memory and
displayed for user in a structured user friendly format (11), said codes and/or information alternatively presented under command names like "statement of account, account balance" (11, 33) or the like, said codes referring to commerce and information units like account balance, statement of account, banking, retail, trading, purchase, bill payment and other required messages, accessible and/or purchasable from/through said computing stations, and means for transmitting said requested information (11, 34) to said terminal;
means for charging based on said request codes and information or purchase provided whereupon.

4. A mobile terminal for at least using in a system according to claim 1 and 2, said mobile terminal further comprises at least one of:
means for real time messaging with and via a digital mobile wireless network (4) and with or via a digital cordless system/station (5) with said computing stations;
means for real time interactive messaging with said computing stations;
means for allowing said user to do purchasing, commerce and paying bills via short data messaging means of said cordless or mobile system (4, 5) without using any data modem with said terminal;
means for controlling and displaying (11) receiving, entering, handling, storing and sending of bills, purchasing, payments, and commerce messages, account information, account balance, statement of account, and the movement on the account or other messages related to said users accounts, and users identification codes (11, 18, 19, 25, 29, 30, 33, 34, 35) through direct short data messaging or via messaging means of said mobile or cordless system (4, 5);
means for encryption and digitally securing messages communicated between said terminal (1, 6) and
said computing stations (2), using a security algorithm and any necessary codes;
means for receiving and storing identities in short data messages and identifying a message and/or user based on said identities, said identities preferably confirmed by a service provider or operator;
means for charging/debiting said smart card (SIM or equivalent) used in or in connection with said terminal, in real time, as the time and a call or service is going on, for payment of mobile users' bills;
means for reading users' codes, users' payment and/or credit or other required information from said smart card (SIM or equivalent) and sending said information via short data messaging service of said network (4, 5) to said station (2) for charging, debiting, billing and commerce issues of users;
means for sending (25), receiving (30), handling and storing of the required payment into the user's smart card (SIM or equivalent), mobile payment part (10, 21, 42);
means for allowing said users (6) to do location dependent (5) messaging, purchasing, commerce and
bill payment by sending and receiving messages via a digital cordless communication system (5) located in a location like a restaurant, a point of sale, a shop, or any other places or via a mobile network 4;
means for receiving information like bills, account information and other required information adapted to short data messages, and means for controlling, processing and displaying said information for user;
means for dividing and arranging long data information to smaller parts, required number of short data messages, and means for sending said messages via messaging means of a mobile or cordless system (4, 5) in an appropriate order, one by one or all at once, enabling receiving computing stations (2) or terminals to receive and combine said messages;
means for arranging, receiving and sending of short messages, resulted from dividing a longer data information, in an appropriate order, one by one or all at once to/from said computing station;
means for combining and displaying (11) said divided messages;
a user friendly interface (11, 9) controller for displaying and controlling menus (11, 31, 32, 33) allowing said user to see, select, input or accept an item (11) and to send and receive information to/from said computing stations in real time basis;
means for controlling and displaying (11), sending, receiving, storing, and handling at least one structured message, inquiry or menu, like a bill menu, in a user friendly format (11), allowing said user to see, select, input or accept an item (11, 33), said inquiry or menu (11) in one embodiment having at least one question and answering field to be, whenever required, answered, entered and/or accepted by user, and means for accessing and displaying said inquiries or menus (11) from said smart card (SIM or equivalent) or said computing station (2);
means for allowing said user using said terminal (1, 6) to do interactive messaging with at least one service provider's computing station (2) by selecting, activating and sending at least one request code, a message, a number or its equivalent (11, 33) to said station, said codes and information (11, 32, 33) are displayed for user in a structured user friendly format (11), said codes and/or information presented under user friendly command names like "send statement of account, account balance, bill" (11, 33) or the like, said codes referring to commerce and information units like account balance, statement of account, banking, retail, trading, purchase, bill payment and other required messages accessible, payable, purchasable from/through said station;
means for displaying said inquiries, menus (11), sending and receiving said messages (11) either via direct short data messaging or via messaging means of said communication system (4, 5) without using any data modem in connection with said terminal for sending, receiving, handling and displaying (11) said messages (11);
an alternative smart card reader (36) integrated in or used in connection with said mobile terminal (1), said card reader used alternatively for both reading SIM or equivalent (10, 39) or used as an additional card reader to said terminal's other smart card reader (10);
means for reading user identities, codes and payments from said smart card (SIM or equivalent) and
transmitting in short data messages to said computing station;
means for entering, receiving and transferring said short data messages to said smart card (SIM or equivalent) and means for controlling said smart card's commands for displaying inquiries, menus, and
payment information messages stored in said smart card;
means for reading the required information from said smart card for encrypting said payment and other messages using any security algorithm, said messages communicated between said terminal and a computing station or other terminals;
means for transferring the required amount of payment from said user smart card (SIM or equivalent), mobile payment part, to the payee's account or mobile terminal (21, 25, 28, 30,42);
means for using and handling different codes, than those of subscriber identities, said different codes stored in said user smart card or terminal or entered by user and used as an identification code;
means for using and handling different codes, than those of subscriber identities, for communication and sending and receiving any information via short messaging means of said terminal and said communication system (4, 5) without using any data modem in connection with said terminal (1).

5. A mobile payment system according to any preceding claim, **characterized in that** the payments or bills of a mobile telephone subscriber or user are paid by entering the subscriber identity and codes into said mobile terminal (1, 6, 8, 41) and the bill's information, including the payee's account number, the amount of payment, bill's due date and reference number into the mobile payment part (10, 21) of said mobile terminal, and by sending the payment messages (13, 25) to said computing station (2, 14, 24).

6. A mobile payment system (43) according to any preceding claim, **characterized in that** said at least one mobile terminal (1, 6) comprises all means for transmitting and receiving payment messages to or from said computing station (2); and that said mobile terminal comprises at least one of:
- a mobile payment part (10, 21) for handling the payment information (11, 22, 31, 32) alternatively entered by user to said mobile terminal or received or monitored by said terminal, and that said payment information are saved into the memory of said mobile terminal or mobile payment part and sent to said computing station, whenever required;
- means which receives a message (18, 19, 29) from said computing station indicating that either the payment or transferring of the required amount of payment from the payer's to the payee's account has been accepted and/or completed or not;
- means to allow the user to enter more than one payment or bill information to the mobile payment part (10, 21, 39), and that after that telephone number of said computing station (2, 14, 24) has been dialled or selected (12, 23) either manually or automatically, all required payment information (13, 25) are sent to said computing station;
- means to allow said terminal to send payment information (13, 25), handled in mobile payment part (10, 12, 39), to the computing station (14, 24) and receive the required payment messages (18, 19, 29) from said computing station by using the Short Message Services (SMS) of the wireless communications network (4, 5, 15, 26); and/or that
- said mobile terminal's subscriber information is alternatively sent from the user's telephone operating network (4, 5, 15, 26) to the computing station (2, 14, 24); and/or that,
- said mobile terminal, in one of its embodiments, includes a charge slip printer (20, 38) that prints all payment information and the information received from said computing station for user of said mobile terminal; and/or that,
- said mobile payment part (10, 21, 39) is designed to be included into any kind of digital or analogue mobile telephone (1, 6) that is capable of operating in cellular communications systems.

7. A mobile payment system according to any preceding claim, **characterized in that** said computing station (2, 14, 24) comprises means whereby after receiving a payment message (13, 25) from said mobile terminal (1, 6, 8, 41), checks and charges the payer's account (17, 28) in accordance with the payment amount received from said mobile terminal and then sends a message (18, 19, 29) to said mobile terminal (8, 41, 37) in order to indicate that payment has been accepted and/or completed or indicating that there is not enough credit in the payer's account; and that said system comprises at least one of:
- said computing station (2, 14, 24) comprises means whereby receives or sends payment messages (11, 18, 19, 29, 30) or other banking and commerce messages (11, 33, 34, 35) to said mobile terminal (1, 6, 8, 41) via either fixed and digital mobile wireless communications networks (4, 5, 7, 15, 16, 26, 27) or via only mobile wireless communications network (15, 26);
- said computing station (2, 14, 24) comprises means whereby receives the payer's information and identity either from the payer's telephone operator or service provider through mobile wireless communications network (4, 15, 26) when payer sends short messages (13, 25) to said computing station (2, 14, 24) or from the payer's mobile terminal (1, 6, 8, 41); and that the payer's information received from said payer's telephone operator or service provider or from said mobile terminal includes payer's subscriber information or identity or any other required information;
- said computing station comprises means whereby monitors the subscriber/user information or other identity, received from said subscriber/user telephone operator or service provider or mobile terminal, and based on said subscriber/user information or other identity and account number transfer the required amount of payment from the subscriber/user account to any other required account;
- in said system said subscriber information or identity is confirmed by subscriber's telephone operator or service provider (4, 5, 15, 26) and said confirmed information is sent to said computing station (2, 14, 24) in which the subscriber identity is checked (17, 28) and based on that, the received payment message (13, 25) can be accepted and a payment completed message (18, 29) is sent to said mobile terminal (1, 6, 8, 41);
- said computing station (2, 14, 24) comprises means whereby handles, sends or receives payment messages (11, 13, 18, 19, 25, 29, 30, 33, 34, 35) to or from the mobile terminals (1, 6, 8, 41, 37) of both the payer and the payee;
- said computing station (2, 14, 24) is equipped with all means for transmitting and receiving messages via any mobile wireless communications network or digital cordless system (5), to or from said mobile terminal (1, 6, 8, 41, 37);
- said mobile payment part (10, 21, 39) comprises means whereby asks the user to enter all payment information (11) such as payee's account number, bill's reference number, bill's due date, the amount of payment and other required information as much as necessary;
- said mobile payment part (10, 21, 39) comprises means whereby after receiving all information about a payment or a bill from the user through user interface (9), asks the user of said mobile terminal "any other payment ?" (13) indicating dose user wants to pay another bill or payment;
- said mobile terminal (1, 6, 8, 41) is used in order to pay the bills of any mobile telephone subscriber by, alternatively, entering each subscriber's identities and codes into said mobile terminal either by using the mobile terminal's user interface (9) or the SIM (or equivalent) card (10, 39) and card reader (10, 36);
- said mobile telephone subscriber's codes are different than said subscriber's identities; and that said subscriber codes can be included both in the subscriber's SIM (or equivalent) card (39) and said computing station (2) alternatively located in the bank (3);
- said mobile terminal (1, 6) is used in order to charge customers, in retail or trading businesses, by entering the customers' telephone SIM (or equivalent) card (10, 39) into said mobile terminal (1, 6) and by using the telephone subscriber identities or different codes of each customer as an identification for payment;
- after that said customer's SIM (or equivalent) card (10, 39) has been entered to said mobile terminal (1, 6, 8), said mobile terminal is connected to the mobile wireless communications network (4, 15) in order to check the subscriber identity, which after the customer's (subscriber's) account is charged by sending payment messages (13) to the computing station (2, 14).

8. A smart card, SIM or equivalent called Mobile Payment Part (10, 39, 21, 42), for using in at least the system of any preceding claim, said mobile payment part is either included in said user terminal (1, 6) or used in connection with said terminal (1, 6), said mobile payment part comprises at least one of:
means for transferring the required amount of payment from said card (SIM or equivalent), to the payee's account or mobile terminal (21, 25, 28, 30,42);
means for interactive question-answering (11, 22, 31, 32) with user through user mobile terminal's (1, 6) user interface and display (11), and means for interactive communicating (25, 29, 33,34) through said user terminal (1, 8, 10) with at least one digital mobile or cordless system (4, 5, 15, 24) and one computing station (2, 14, 24) via short data messaging services of said system (4, 5);
means for storing and handling different codes, than those of subscriber identities;
means for receiving, storing, displaying and transferring short data messages received (11,30,34,35) by said terminal (1, 6), to said smart card (SIM or equivalent 42, 21) and means for handling and sending any short data messages (13, 25, 33, 11) from said card via said terminal to said computing station via short data messaging;
means for digitally securing, encrypting and decrypting messages communicated via said terminal (1, 6), with a computing stations or other terminals, using a security algorithm and required codes;
means for displaying (11) said messages for user via said terminal (1, 6);
means for sending identities in short data messages via said terminal (1, 6), said identities preferably confirmed by a service provider or operator for said computing station or a recipient like a payee;
means for receiving and storing identities in short data messages and identifying a message and user based on said identities, said identities preferably confirmed by a service provider or operator;
a user friendly interface (11, 9) controller for displaying and controlling menus (11, 31, 32, 33), via said terminal, allowing said user to see, select, input or accept an item (11) and to send and receive information;
means for controlling and displaying (11) receiving, entering, handling, storing and sending of bills, commerce messages, purchasing, payments, account information, account balance, statement of account, and other messages related to said users accounts, and users identification codes (11, 18, 19, 25, 29, 30, 33, 34, 35) via short data messaging means of said terminal (1, 6) and said system (4, 5);
means for arranging commands for activating at least one structured and stored inquiry or menu (11, 33, 31, 32) to be displayed on the screen (11) of said mobile terminal and for sending and receiving information to/from said computing station (2) and other terminals (6);
means for controlling and handling said inquiry or menu formats (11) that is monitored and displayed (11) through said user terminal (1) allowing said user to select an item (11) or input or accept an item (11) from/to said inquiry or menu (11), through a user interface of said terminal;
means for allowing said user using said mobile terminal (1, 6) to do interactive messaging with said at least one computing station (2) by selecting, activating and sending at least one request code, a message, a number or its equivalent (11, 33) to said station, said codes and information (11, 32, 33) are displayed for user in a structured user friendly format (11), said codes and/or information presented under user friendly command names like "send statement of account, account balance, bill" (11, 33) or the like, said codes referring to commerce and information units like account balance, statement of account, banking, retail, trading, purchase, bill payment and other required messages accessible, payable, purchasable from/through said station (2);
means for adapting information, like bills or other information, to smaller parts and to short messages, and means for processing and displaying information received via short messaging;
means for receiving, combining and sending short data messages originated from a long data information or several short messages;
means for dividing and arranging a long data information to required number of short messages.

9. A method in a real time mobile system, the system at least according to any preceding claim, for bill payment of mobile users and providing users with means for performing mobile commerce, banking, trading, and sending and receiving information, wherein user mobile terminal (1, 6), having means for allowing a user to use smart cards (SIM or equivalent 10, 39) in connection with said terminal, communicates with/through at least one remote computing station (2, 14, 24) via a digital mobile or cordless communications system (4, 5) without using any data modem in connection with said terminal, **characterized in that** said method comprises the following steps:
- allowing a user by using said mobile terminal (1, 6) to have real time interactive messaging with said computing station by selecting, activating and sending at least one request code, a message, a number or its equivalent (11, 33) to said computing station, said codes and information (11, 33) are alternatively either sent by said computing station to said terminal or accessed by user from said terminal or its smart card's (SIM or equivalent) memory and displayed (11) for user in a structured and controllable user friendly format (11, 33), said codes and/or information presented under user friendly command names like "send statement of account, account balance, bill" (11, 33) or the like, said codes referring to commerce and information units like account balance, statement of account, banking, retail, trading, bill payment, commerce, and the like, accessible, payable, purchasable from/through said computing station (2);
- sending said code or its equivalent alternatively together with said user related or a different code to a relevant computing station (2, 14, 24) via a mobile or cordless system (4, 5), and that said codes sent from said mobile terminal to said system (4, 5, 15, 26) are alternatively different than said codes used between said system and said computing station;
- upon receiving of said request code, by said computing station, accessing said information in real time from said computing station and sending said information to said user terminal and when required charging an account;
- in said terminal handling, controlling and displaying (11) said received information units via said terminal's screen (11), and allowing said user to accept, select, input, handle, save or delete or send said information to other terminals or computing station; and that alternatively:
- in said method said banking, commerce and other messages are carried out via direct short data message communication or via messaging means of communication system (4, 5) to/from or through said computing stations, and that said messages communicated between said mobile terminal (1, 6), smart card (mobile payment part 10, 39, 21, 42) and computing stations (2) are, whenever required, encrypted and secured using a security algorithm and any required codes.

10. A method as claimed in claim 9, said method being arranged to operate in user mobile terminals (1, 6, 8, 41, 37) and a remote computing station that said terminals communicate with via a digital mobile or cordless communication system (4, 5), said computing station and users' terminals are arranged to send and receive and handle data messages without using any data modem in connection with said user terminal, the method further comprising the following steps:
- said user terminals or computing stations adapt and arrange any long data information entered to or received by said terminals or computing stations to smaller parts and required number of short data messages;
- sending said messages in an appropriate order, one by one or all at once, via said mobile or cordless network to the required computing stations or receiving terminals;
- in said receiving terminals or computing stations received short messages are arranged and combined to form said information, in said terminal said long data received in small parts is further handled and arranged to be displayed through a display (11) of said terminal to allow said user to see, store, control, handle and if required send forward said data.

## Patentansprüche

1. Mobiles Echtzeit-Zahlungssystem für die Rechnungszahlung mobiler Benützer und/oder zum Versorgen von Benützern mit allen Einrichtungen der mobilen Bankabwicklung, des Kommerzes, des Handels und des Sendens und Empfangens von Information, wobei das System von den Einrichtungen für Kurzmitteilungs-Dienstleistungen mindestens eines mobilen drahtlosen Kommunikationsnetzes oder eines digitalen schnurlosen Kommunikationssystems (5) und dem Modul (SIM oder Äquivalent 10, 21, 39, 42) für die Identität des Abonnenten bzw. Benützers Gebrauch macht, wobei das System folgendes aufweist
- wenigstens ein mobiles Terminal (1, 6, 8, 37, 41) unter Verwendung des Identitätsmoduls (10, 21, 39, 42), wobei Einrichtungen zum Eingeben, Übertragen, Empfangen, Verarbeiten und Anzeigen (11) von Informationen vorgesehen sind, die im wesentlichen mit folgendem in Zusammenhang stehen, aber nicht darauf beschränkt sind: Zahlungen von Rechnungen des Telephon-Abonnenten oder des Benützers des mobilen Terminals; Überweisen von Geld vom Bankkonto des Abonnenten oder Benützers an andere Konten; Senden und Empfangen wenigstens von Zahlungsmitteilungen (11, 13, 18, 19, 20, 25, 29, 33, 34, 35) oder von Mitteilungen, welche den Kontosaldo, den Kontostand oder Kontobewegungen (33, 34, 35) des Telephon-Abonnenten oder des Benützers des mobilen Terminals (1, 6, 8, 37, 41) umfassen, und die Kommunikation von bank- zahlungs- und handelsbezogenen oder anderen erforderlichen Mitteilungen (11);
- wenigstens eine Computerstation (2, 14, 24), welche in einer Bank (3) oder an anderen erforderlichen Orten aufgestellt ist, welche Computerstation Einrichtungen für die direkte Kurzmitteilungs-Kommunikation mit dem mobilen Terminal oder über Mitteilungseinrichtungen des Kommunikationsnetzes (4, 5) aufweist sowie zum Überweisen des Zahlungsbetrages vom Konto des Benützers des mobilen Terminals oder Telephon-Abonnenten auf ein anderes Konto (17, 28) oder von einem Kundenkonto, dessen Kontoinformation in das mobile Terminal eingegeben wird, auf ein anderes Konto; und/oder zum Empfangen und Senden von Mitteilungen über den Kontensaldo, den Kontostand oder Kontobewegungen (11, 33, 34, 35) des Abonnenten des mobilen Terminals oder Benützers, und für die Kommunikation von bank- zahlungs- und handelsbezogenen oder anderen erforderlichen Mitteilungen (11);
- wenigstens das eine drahtlose Mobil-Kommunikationsnetz (4, 15, 26) oder ein digitales schnurloses Kommunikationssystem (5), über welches das mobile Terminal an die Computerstation die Zahlungsmitteilungen und/oder zumindest Mitteilungen über den Kontensaldo, den Kontostand oder Kontobewegungen des Abonnenten des mobilen Terminals oder Benützers senden oder von der Computerstation empfangen kann, sowie die Kommunikation von bank-, zahlungs- und/oder handelsbezogenen oder anderen erforderlichen Mitteilungen (11).

2. Mobiles Echtzeit-System nach Anspruch 1, **dadurch gekennzeichnet, daß** in dem System mindestens Rechnung-, Bank-, Handels- und Kontoinformationen und andere diesbezügliche Mitteilungen, Menüs und Abfragen, so weit als nötig, vorgesehen und für den Benützer über den Schirm des mobilen Terminals (1, 6) angezeigt (11, 33) werden, um es dem Benützer zu erlauben, einen Gegenstand oder irgend eine erforderliche Information zu sehen, zu akzeptieren, auszuwählen und einzugeben und um Mitteilungen an die Computerstationen oder anderen Terminals zu senden oder von ihnen ohne die Verwendung irgend eines Datenmodems mit dem mobilen Terminal zu erhalten, und wobei zwischen dem mobilen Terminal (1, 6), einer intelligenten Karte (10, 21, 39, 30, 42, mobiler Zahlungsteil) und den Computerstationen (2) ausgetauschte Mitteilungen, wann immer erforderlich, verschlüsselt und unter Benützung eines Sicherheits-Algorithmus vollständig gesichert werden, und daß das System ferner Einrichtungen aufweist, welche es dem das Terminal (1, 6) verwendenden Benützer erlauben, durch Absenden wenigstens eines Anfragecodes, einer Mitteilung (11, 33) an die Computerstation einen interaktiven Mitteilungsaustausch mit der Computerstation in Echtzeit zu haben, wobei die Codes und Informationen (11, 33) entweder von der Computerstation an das Terminal gesendet werden oder vom Benützer von dem Terminal oder dem Speicher seiner intelligenten Karte (SIM oder ein Äquivalent) zugänglich sind und dem Benützer in einem strukturierten, benutzerfreundlichen Format (11, 33) angezeigt werden, wobei ferner die Codes und/oder Informationen unter Befehlsnamen, wie "Kontostand, Kontensaldo" (11, 33) od. dgl., präsentiert werden und die Codes sich auf den Kommerz und Informationseinheiten, wie Kontensaldo, Kontostand, Bankgeschäft, Einzelhandel, Handel, Kauf, Rechnungszahlung und andere benötigte Mitteilungen beziehen, welche von bzw. über Computerstationen zugänglich und/oder käuflich sind, sowie Einrichtungen zum Übertragen der angeforderten Information (11, 34) an das Terminal.

3. Computerstation wenigstens für die Benützung in einem System nach Anspruch 1 und 2, welche Computerstation (2, 14, 24) ferner folgendes aufweist:
Einrichtungen zum Kommunizieren mit dem mobilen Terminal (1, 6) des Benützers über ein Mobilnetz (4) oder über ein digitales schnurloses System (5) und alle Einrichtungen für die drahtgebundene und/oder drahtlose Kommunikation sowie zumindest eine von folgenden Einrichtungen:
Einrichtungen zum Empfangen und Speichern angeforderter, vom mobilen Terminal (1, 6) gesendeter Zahlungsbeträge an Konten, welche zumindest für die Rechnungen mobiler Benutzer verwendet werden;
Einrichtungen zum Steuern, Senden, Empfangen, Speichern und Verarbeiten wenigstens einer benutzerfreundlich strukturierten Mitteilung, einer Anfrage, eines Menüs (11, 33), welches es dem Benützer erlaubt, einen Gegenstand auszuwählen, einen Gegenstand einzugeben oder anzunehmen und die erforderliche Information zu senden und zu empfangen, wobei die Anfrage oder das Menü bei einem Ausführungsbeispiel wenigstens ein Frage- und Antwortfeld für die Antwort/Eingabe und/oder Annahme durch den Benützer aufweist;
Einrichtungen zum Empfangen, Steuern und Verarbeiten, Speichern und Senden von Rechnungen, Zahlungen, Kontoinformationen des mobilen Benützers, des Kontensaldos, des Kontostandes oder der Bewegungen am Konto sowie von Bank- und Handelsgeschäftmitteilungen (11, 18, 19, 25, 29, 30, 33, 34, 35) von bzw. an die mobilen Terminals von Benützern über direkte Kurzdatenmitteilungen (SMS) oder über Mitteilungseinrichtungen eines digitalen, mobilen, drahtlosen (4) oder schnurlosen Kommunikationssystems (5) zum Senden, Empfangen, Verarbeiten und Darstellen (11) dieser Mitteilungen in einem benützerfreundlichen Format (11), um es Benützern zu ermöglichen, einen Gegenstand auszuwählen, zu akzeptieren oder einzugeben und eine Transaktion abzuschließen, ein Konto und andere benötigte Informationen abzurufen;
Einrichtungen zum Verschlüsseln und zum digitalen Sichern von Mitteilungen, welche zwischen den Terminals (1, 6), dem mobilen Zahlungsteil (10, 21, 39, 30, 42) und Computerstationen ausgetauscht werden, unter Benützung eines Sicherheitsalgorithmus und beliebiger nötiger Codes;
Einrichtungen zum Empfangen, Speichern und Überprüfen von Benützer-Identitäten, wobei diese Identitäten alternativ von einem Dienstleistungsanbieter oder einer Bedienungsperson bestätigt werden;
die Konten der Benützer oder Einrichtungen zum Kommunizieren mit den Bankkonten der Benützer und Einrichtungen zum Überprüfen, Belasten/Debitieren der Konten (17) oder zum Überweisen der erforderlichen Zahlungsbeträge von einem Konto auf das andere in Echtzeit, in dem Maße als die Zeit und ein Anruf oder eine Dienstleistung fortschreitet, für die Zahlung von Rechnungen mobiler Benützer;
Einrichtungen zum Steuern und Überprüfen der Benützerkonten in Echtzeit und Einrichtungen zum Informieren der Benützer über die Kontosituation, wann immer es erforderlich ist;
Einrichtungen zum Belasten der Benutzerkonten oder zum Überweisen von Zahlungen von einem Konto zum anderen bei Erhalt einer Rechnung oder eines Zahlungsauftrages oder einer Mitteilung der Akzeptanz vom mobilen Terminal über Kurzmitteilungen;
Einrichtungen zum Überprüfen der Benützerkonten in Echtzeit oder zum periodischen Belasten dieser Konten und/oder zum Senden von sich auf die Kontosituation beziehenden Mitteilungen an die Benützerterminals;
Einrichtungen für die interaktive Kommunikation von kurzen Datenmitteilungen mit dem mobilen Terminal und der intelligenten Karte (SIM oder Äquivalent) des Benützers, und Einrichtungen zum Senden und Empfangen von Zahlungen an das/von dem mobile(n) Terminal (25, 28) des Benutzers und der intelligenten Karte, dem mobilen Zahlungsteil (30, 42) über das mobile oder schnurlose System (4, 5);
Einrichtungen zum Umwandeln von Rechnungen, Bankmitteilungen, Kontensaldo, Kontostand und anderer erforderlichen Daten in kleinere Teile zum Senden an die mobilen und tragbaren Terminals der Benützer, um es den Terminals zu ermöglichen, die Mitteilungen zu empfangen, zu verarbeiten und anzuzeigen (11), ohne ein Datenmodem in Verbindung mit dem Terminal zu verwenden;
Einrichtungen zum Kombinieren kurzer Datenmitteilungen und Einrichtungen zum Unterteilen und
Anordnen langer Dateninformationen, wie Rechnungen oder Kontoinformationen, in kleinere Teile, eine erforderliche Anzahl von Kurzmitteilungen, wobei die Mitteilungen in entsprechender Anordnung, eine nach dem anderen oder alle auf einmal, an die Terminals der Benützer über ein digitales, mobiles, drahtloses Netz (4) oder ein digitales schnurloses System (5) gesandt werden, um es den empfangenden Terminals zu gestatten, die Mitteilungen zu empfangen und zu kombinieren, ohne ein Datenmodem zu verwenden;
Einrichtungen zum Empfangen, Speichern und Senden kurze Datenmitteilungen, welche aus der Unterteilung einer längeren Dateninformation hervorgehen, an die/von den mobilen Terminals der Benützer in entsprechender Anordnung, eine nach der anderen oder alle auf einmal;
Einrichtungen zum Überwachen der Identitäten und Codes der Benützer;
Einrichtungen zum Identifizieren der Benützer und zur auf den Identitäten der mobilen Benützer basierenden Kommunikation oder der verschiedenen, vom mobilen Terminal oder von der mobilen Bedienungsperson oder dem Dienstleistungsanbieter gesendeten Codes;
Einrichtungen zum Benachrichtigen des Benützerkontos über erhaltene Datenmitteilungen oder jegliche in Benützerkonten durchgeführte Veränderung durch Senden einer Kurzmitteilung an das mobile Terminal (29, 19) des Benützers;
Einrichtungen zum periodischen Senden einer Information über das Konto des Benützers, wie Kontensaldo oder Kontostand (35) und anderer Mitteilungen über kurze Datenmitteilungen;
Einrichtungen, welche es dem das Terminal benützenden Benützer gestatten, einen interaktiven Mitteilungsaustausch mit der Computerstation in Echtzeit durch Absenden wenigstens eines Anfragecodes, einer Mitteilung (11, 33) an die Computerstation zu haben, wobei die Codes und die Informationen (11, 33) entweder von der Computerstation an das Terminal gesandt werden oder vom Benützer in das Terminal eingegeben werden, oder der Benützer auf sie am Terminal oder dem Speicher seiner intelligenten Karte zugreift, und sie für den Benützer in strukturiertem, benützerfreundlichem Format (11) wiedergegeben werden, wobei die Codes und/oder die Information alternativ unter Befehlsnamen präsentiert werden, wie "Kontostand, Kontensaldo" (11, 33) od. dgl. und die Codes sich auf den Kommerz und auf Informationseinheiten beziehen, wie den Kontensaldo, den Kontenstand, Bank-, Einzelhandels-, Geschäfts-, Kaufs-, Rechnungszahlungs- und andere erforderliche Mitteilungen, welche auf der Computerstation oder durch sie zugänglich oder käuflich sind, sowie Einrichtungen zum Übermitteln der verlangten Information (11, 34) auf das Terminal;
Einrichtungen zum Belasten auf Basis der Anfragecodes und der Information oder dem dabei vorgesehenen Kauf.

4. Mobiles Terminal wenigstens für die Benützung in einem System nach Anspruch 1 und 2, welches mobile Terminal ferner wenigstens eines der folgenden Merkmale aufweist:
Einrichtungen zum Mitteilungsaustausch in Echtzeit mit und über ein digitales, mobiles, drahtloses Netz (4), oder mit oder über ein digitales schnurloses System bzw. eine solche Station (5) mit den Computerstationen;
Einrichtungen für einen interaktiven Mitteilungsaustausch mit der Computerstation in Echtzeit;
Einrichtungen, welches es dem Benützer gestatten, Käufe, Handelsgeschäfte und Rechnungszahlungen über Einrichtungen für kurze Datenmitteilungen des mobilen Systems (4, 5) ohne Benutzung eines Datenmodems mit diesem Terminal durchzuführen;
Einrichtungen zum Steuern und Anzeigen (11) Empfangen, Eingeben, Verarbeiten, Speichern und Senden von Rechnungen, Käufen, Zahlungen und kommerziellen Mitteilungen, Kontoinformationen, einen Kontenstand und die Bewegungen auf dem Konto oder andere Mitteilungen, welche sich auf die Konten des Benützers und die Identifikationscodes (11, 18, 19, 25, 29, 30, 33, 34, 35) des Benützers beziehen, über direkte kurze Datenmitteilungen oder über Mitteilungseinrichtungen des mobilen oder schnurlosen Systems (4, 5);
Einrichtungen zum Verschlüsseln und zum digitalen Sichern von Mitteilungen, welche zwischen dem Terminal (1, 6) und den Computerstationen (2) ausgetauscht werden, wobei ein Sicherheitsalgorithmus und beliebige erforderliche Codes verwendet werden;
Einrichtungen zum Empfangen und Speichern der Identitäten in kurzen Datenmitteilungen und zum Identifizieren einer Mitteilung und/oder des Benützers auf der Basis der Identitäten, wobei die Identitäten vorzugsweise von einem Dienstleistungsanbieter oder einer Bedienungsperson bestätigt werden;
Einrichtungen zum Belasten/Debitieren der intelligenten Karte (SIM oder Äquivalent), welche im oder in Verbindung mit dem Terminal benutzt wurde, in Echtzeit, in dem Maße als die Zeit und ein Anruf oder eine Dienstleistung fortschreitet, für die Zahlung von Rechnungen des mobilen Benützers;
Einrichtungen zum Lesen der Benützercode, der Zahlung des Benützers und/oder des Kredits oder anderer erforderlicher Information aus der intelligenten Karte (SIM oder Äquivalent) und zum Senden der Information über den Dienst des Netzes (4, 5) für kurze Datenmitteilungen an die Station (2) zum Belasten, Debitieren, zur Rechnungsausstellung und für kommerzielle Angelegenheiten des Benützers;
Einrichtungen zum Senden (25), Empfangen (30), Verarbeiten und Speichern der erforderlichen Zahlung in der intelligenten Karte (SIM oder Äquivalent), mobilen Zahlungsteil (10, 21, 42);
Einrichtungen, um es dem Benützer zu gestatten, ortsabhängigen (5) Mitteilungsaustausch, Kauf, Handel und Rechnungszahlung zu treiben, indem Mitteilungen über ein schnurloses Kommunikationssystem (5) gesendet und empfangen werden, welches in einer Lokalität, wie einem Restaurant, einem Verkaufspunkt, einem Geschäft oder an beliebigen anderen Plätzen angeordnet sind, oder über ein mobiles Netz (4);
Einrichtungen zum Empfangen von Informationen, wie Rechnungen, Kontoinformationen oder andere erforderliche Informationen, welche für kurze Datentmitteilungen geeignet sind, und Einrichtungen zum Steuern, Verarbeiten und Anzeigen der Information für den Benützer;
Einrichtungen zum Unterteilen und Anordnen langer Dateninformationen in kleinere Teile, eine erforderliche Anzahl kurzer Datenmitteilungen, und Einrichtungen zum Senden der Mitteilungen über die Mitteilungseinrichtungen eines mobilen oder schnurlosen Systems (4, 5) in entsprechender Anordnung, eine nach der anderen oder alle auf einmal, und so es den empfangenden Computerstationen (2) oder Terminals den Empfang und die Kombination der Mitteilungen zu ermöglichen;
Einrichtungen zum Anordnen, Empfangen und Senden kurzer Mitteilungen, welche sich aus der Unterteilung einer langen Dateninformation ergeben, in entsprechender Ordnung, eine nach der anderen oder alle auf einmal, an die oder von der Computerstation;
Einrichtung zum Kombinieren und Anzeigen (11) der unterteilten Mitteilungen;
eine Steuerungseinrichtung für ein benützerfreundliches Interface (11, 9) zum Anzeigen und Steuern von Menüs (11, 31, 32, 33), welche es dem Benützer erlauben, einen Gegenstand (11) zu sehen, auszuwählen, einzugeben oder zu akzeptieren und Informationen an die Computerstationen oder von ihnen auf Echtzeitbasis zu senden oder zu empfangen;
Einrichtungen zum Steuern und Anzeigen (11), Senden, Empfangen und Speichern sowie zum Verarbeiten wenigstens einer strukturierten Mitteilung, Anfrage oder eines Menüs, wie eines Rechnungsmenüs, in einem benutzerfreundlichen Format (11), welches es dem Benutzer gestattet, einen Gegenstand (11, 33) zu sehen, auszuwählen, einzugeben oder zu akzeptieren, wobei die Anfrage oder das Menü (11) in einer Ausführungsform wenigstens ein Frage- und Antwortfeld für die Antwort, Eingabe und/oder Annahme durch den Benützer aufweist, sowie Einrichtungen für den Zugang und die Anzeige der Anfragen oder Menüs (11) von der intelligenten Karte (SIM oder Äquivalent) aus oder von der Computerstation (2);
Einrichtungen, welche es dem das Terminal (1, 6) benützenden Benützer gestatten, einen interaktiven Mitteilungsaustausch mit der Computerstation (2) zumindest eines Dienstleistungsanbieters durch Auswählen, Aktivieren und Absenden wenigstens eines Anfragecodes, einer Mitteilung, einer Nummer oder ihres Äquivalents (11, 33) an die Station zu führen, wobei die Codes und die Information (11, 32, 33) für den Benützer in einem strukturierten benützerfreundlichen Format (11) dargestellt werden und die Codes und/oder Information unter benützerfreundlichen Befehlsnamen, wie "Sende den Kontostand, den Kontensaldo, die Rechnung" (11, 33) od. dgl., präsentiert werden und die Codes sich auf Kommerz- und Informationseinheiten beziehen, wie den Kontensaldo, den Kontostand, Bank-, Einzelhandels, Geschäfts-, Kaufs-, Rechnungszahlungs- und andere erforderliche Mitteilungen, welche von der Computerstation oder durch sie zugänglich, zahlbar bzw. käuflich sind;
Einrichtungen zum Anzeigen der Anfragen, Menüs (11), zum Senden und Empfangen der Mitteilungen (11) entweder über den direkten, kurzen Datenmitteilungsaustausch oder über Mitteilungseinrichtungen des Kommunkationssystems (4, 5) ohne Benutzung eines Datenmodems in Verbindung mit dem Terminal zum Senden, Empfangen, Verarbeiten und Anzeigen (11) der Mitteilungen (11);
eine alternative Leseeinrichtung (36) für intelligente Karten, welcher in das mobile Terminal (1) integriert ist oder in Verbindung damit benutzt wird, welche Kartenleseeinrichtung alternativ sowohl zum Lesen einer SIM oder deren Äquivalent (10, 39) benutzt wird oder als zusätzliche Kartenleseeinrichtung zu einer anderen Leseeinrichtung (10) des Terminals für intelligente Karten;
Einrichtungen zum Ablesen der Identität des Benützers, der Codes und Zahlungen von der intelligenten Karte (SIM oder Äquivalent) und Übertragen in Form von kurzen Datenmitteilungen an die Computerstation;
Einrichtungen zum Eingeben, Empfangen und Übertragen der kurzen Datenmitteilungen an die intelligente Karte (SIM oder Äquivalent) und Einrichtungen zum Steuern der intelligenten Kartenbefehle zum Anzeigen von in der intelligenten Karte gespeicherten Anfragen, Menüs und Mitteilungen mit einer Zahlungsinformation;
Einrichtungen zum Ablesen der erforderlichen Information von der intelligenten Karte, um die Zahlung und andere Mitteilungen unter Benützung eines beliebigen Sicherheitsalgorithmus zu verschlüsseln, wobei die Mitteilungen zwischen dem Terminal und einer Computerstation oder anderen Terminals ausgetauscht werden;
Einrichtungen zum Überweisen des erforderlichen Zahlungsbetrages von der intelligenten Karte (SIM oder Äquivalent) des Benützers, dem mobilen Zahlungsteil, an das Konto des Zahlungsempfängers oder dessen mobiles Terminal (21, 25, 28, 30, 42);
Einrichtungen zum Verwenden und Verarbeiten unterschiedlicher Codes als jener der Abonnenten-Identitäten, wobei die unterschiedlichen Codes in der intelligenten Karte des Benützers oder im Terminal gespeichert oder vom Benützer eingegeben und als Identifikationscode benutzt werden;
Einrichtungen zum Verwenden und Verarbeiten unterschiedlicher Codes als jener der Abonnenten-Identitäten für die Kommunikation und das Senden und Empfangen jedwelcher Information über die Einrichtungen für Kurzmitteilungen des Terminals und des Kommunikationssystems (4, 5), ohne irgend ein Datenmodem in Verbindung mit dem Terminal (1) zu benutzen.

5. Mobiles Zahlungssystem nach einem der vorhergehenden Ansprüche, **dadurch gekennzeichnet**, **daß** die Zahlungen oder Rechnungen eines mobilen Telephon-Abonnenten oder Benützers durch Eingabe der Identität und Codes des Abonnenten in das mobile Terminal (1, 6, 8, 41) und der Rechnungsinformation, einschließlich der Kontonummer des Zahlungsempfängers, des Zahlungsbetrages, des Fälligkeitsdatums und der Referenznummer der Rechnung, in den mobilen Zahlungsteil (10, 21) des mobilen Terminals bezahlt werden, und durch Senden der Zahlungsmitteilungen (13, 25) an die Computerstation (2, 14, 24).

6. Mobiles Zahlungssystem (43) nach einem der vorhergehenden Ansprüche, **dadurch gekennzeichnet, daß** das mindestens eine mobile Terminal (1, 6) alle Einrichtungen zum Übermitteln und Empfangen von Zahlungsmitteilungen an die bzw. von der Computerstation (2) aufweist; und daß das mobile Terminal mindestens eines der folgenden Merkmale besitzt:
- einen mobilen Zahlungsteil (10, 21) zum Verarbeiten der Zahlungsinformation (11, 22, 31, 32), welche alternativ vom Benützer in das mobile Terminal eingegeben oder von dem Terminal empfangen oder überwacht wird, und daß die Zahlungsinformation im Speicher des mobilen Terminals oder des mobilen Zahlungsteiles abgelegt und an die Computerstation gesendet wird, wann immer es erforderlich ist;
- Einrichtungen, welche eine Mitteilung (18, 19, 29) von der Computerstation empfangen, die angibt, daß die Zahlung oder Überweisung des erforderlichen Zahlungsbetrages vom Konto des Zahlenden an dasjenige des Zahlungsempfängers entweder angenommen und/oder durchgeführt wurde oder nicht;
- Einrichtungen, welche es dem Benützer gestatten, mehr als eine Zahlung oder Rechnungsinformation in den mobilen Zahlungsteil (10, 21, 39) einzugeben, und daß nachdem die Telephonnummer der Computerstation (2, 14, 24) entweder manuell oder automatisch gewählt bzw. ausgewählt (12, 23) worden ist, alle erforderliche Zahlungsinformationen (13, 25) an die Computerstation gesandt werden;
- Einrichtungen, welche es dem Terminal gestatten, eine im mobilen Zahlungsteil (10, 12, 39) verarbeitete Zahlungsinformation (13, 25) an die Computerstation (14, 24) zu senden und die erforderlichen Zahlungsmitteilungen (18, 19, 29) von der Computerstation zu empfangen, indem die Kurzmitteilungsdienste (SMS) des drahtlosen Kommunikationsnetzes (4, 5, 15, 26) benutzt werden; und/oder daß
- die Abonnenten-Information des mobilen Terminals alternativ vom Betriebsnetz (4, 5, 15, 26) des Telephons des Benützers an die Computerstation (2, 14, 24) gesendet wird; und/oder daß
- das mobile Terminal bei einer seiner Ausführungsformen, einen Belastungszetteldrucker (20, 38) aufweist, welcher alle Zahlungsinformationen und die von der Computerstation empfangene Information für den Benützer des mobilen Terminals ausdruckt; und/oder daß
- der mobile Zahlungsteil (10, 21, 39) derart ausgebildet ist, daß er in eine beliebige Art von digitalem oder analogen mobilen Telephon (1, 6) eingebaut ist, welches dazu im Stande ist, in zellularen Kommunikationssystemen zu arbeiten.

7. Mobiles Zahlungssystem nach einem der vorhergehenden Ansprüche, **dadurch gekennzeichnet, daß** die Computerstation (2, 14, 24) Einrichtungen aufweist, welche nach dem Erhalt einer Zahlungsmitteilung (13, 25) vom mobilen Terminal (1, 6, 8, 41) des Zahlenden Konto (17, 28) überprüft und gemäß des vom mobilen Terminal erhaltenen Zahlungsbetrages belastet und sodann eine Mitteilung (18, 19, 29) an das mobile Terminal (8, 41, 37) sendet, um anzuzeigen, daß die Zahlung akzeptiert und/oder durchgeführt worden ist, oder anzuzeigen, daß auf dem Konto des Zahlers nicht genügend Kredit ist; und daß dieses System wenigstens eines der folgenden Merkmale aufweist:
- die Computerstation (2, 14, 24) umfaßt Einrichtungen, mit deren Hilfe sie Zahlungsmitteilungen (11, 18, 19, 29, 30) oder andere Bank- oder Kommerzmitteilungen (11, 33, 34, 35) an das mobile Terminal (1, 6, 8, 41) sendet oder empfängt, und zwar entweder über fixe und digitale, mobile, drahtlose Kommunikationsnetze (4, 5, 7, 15, 16, 26, 27) oder über ein bloß mobiles, drahtloses Kommunikationsnetz (15, 26);
- die Computerstation (2, 14, 24) umfaßt Einrichtungen, mit deren Hilfe sie die Information und Identität des Zahlenden entweder von der Telephonbedienungsperson des Zahlers oder vom Dienstleistungsanbieter über das mobile, drahtlose Kommunikationsnetz (4, 15, 26) empfängt, wenn der Zahlende Kurzmitteilungen (13, 25) an die Computerstation (2, 14, 24) oder vom mobilen Terminal (1, 6, 8, 41) des Zahlers sendet; und daß die von der Telephonbedienungsperson des Zahlers oder vom Dienstleistungsanbieter oder vom mobilen Terminal empfangene Information des Zahlers eine Abonnenten-Information des Zahlers oder die Identität oder jede andere erforderliche Information umfaßt;
- die Computerstation umfaßt Einrichtungen, mit deren Hilfe sie die Information des Abonnenten/Benutzers oder eine andere Identität überwacht, die sie von der Telephonbedienungsperson oder vom Dienstleistungsanbieter oder vom mobilen Terminal empfangen hat, und die auf der Information des Abonnenten/Benutzers oder eine anderen Identität und der Kontonummer basiert, und den erforderlichen Zahlungsbetrag vom Konto des Abonnenten/Benutzers auf irgend ein anderes gefordertes Konto überweist;
- die Abonnenten-Information bzw. Identität wird in dem System von der Telephonbedienungsperson des Zahlers oder vom Dienstleistungsanbieter (4, 5, 15, 26) bestätigt, und die bestätigte Information wird an die Computerstation (2, 14, 24) gesandt, in welcher des Abonnenten Identität überprüft wird (17, 28), und auf dieser Basis kann die empfangene Zahlungsmitteilung (13, 25) akzeptiert werden, und es wird eine Mitteilung über die durchgeführte Zahlung (18, 29) an das mobile Terminal (1, 6, 8, 41) gesandt;
- die Computerstation (2, 14, 24) umfaßt Einrichtungen, mit deren Hilfe sie Zahlungsmitteilungen (11, 13, 18, 19, 25, 29, 30, 33, 34, 35) an oder von mobile(n) Terminals (1, 6, 8, 41, 37) sowohl des Zahlers als auch des Zahlungsempfängers verarbeitet, sendet oder empfängt;
- die Computerstation (2, 14, 24) ist mit allen Einrichtungen zum Übertragen und Empfangen von Mitteilungen über ein beliebiges mobiles, drahtloses Kommunikationsnetz oder ein digitales schnurloses System (5) an das oder von dem mobile(n) Terminal (1, 6, 8, 41, 37) ausgestattet;
- der mobile Zahlungsteil (10, 21, 39) umfaßt Einrichtungen, mit deren Hilfe er den Benützer ersucht, alle Zahlungsinformationen (11), wie die Kontonummer des Zahlungsempfängers, die Referenznummer der Rechnung, das Fälligkeitsdatum der Rechnung, den Zahlungsbetrag und andere erforderliche Information, so weit sie nötig ist, einzugeben;
- der mobile Zahlungsteil (10, 21, 39) umfaßt Einrichtungen, mit deren Hilfe er den Benützer des mobilen Terminals nach dem Erhalt aller Informationen über eine Zahlung oder eine Rechnung vom Benützer über das Benützer-Interface (9) frägt "noch eine Zahlung ?" (13), um anzuzeigen, daß der Benützer noch eine andere Rechnung zahlen bzw. eine Zahlung leisten will;
- das mobile Terminal (1, 6, 8, 41) wird dazu benutzt, Rechnungen eines beliebigen mobilen Telephon-Abonnenten zu bezahlen, indem, als Alternative, die Identitäten und Codes eines jeden Abonnenten in das mobile Terminal entweder durch Verwendung des Interface (9) des mobilen Terminalbenützers oder die SIM (oder äquivalente) Karte (10, 39) und eine Kartenleseeinrichtung (10, 36) benutzt werden;
- die Codes der mobilen Telephon-Abonnenten unterscheiden sich von den Identitäten der Abonnenten; wobei die Codes der Abonnenten sowohl in der SIM (oder äquivalenten) Karte (39) des Abonnenten als auch in der Computerstation (2) vorgesehen sein können, welche alternativ in der Bank (3) angeordnet ist;
- das mobile Terminal (1, 6) wird dazu benutzt, Kunden bei Einzelhandels- und Handelsgeschäften zu belasten, indem die Telephon-SIM (oder äquivalente) Karte (10, 39) in das mobile Terminal (1, 6) eingegeben wird, und indem die Identitäten des Telephon-Abonnenten oder verschiedene Codes jedes Kunden als Identifikation für die Zahlung verwendet werden;
- nachdem die SIM (oder äquivalente) Karte (10, 39) des Kunden in das mobile Terminal (1, 6, 8) eingegeben worden ist, wird das mobile Terminal mit dem mobilen, drahtlosen Kommunikationsnetz (4, 15) verbunden, um die Identität des Abonnenten zu überprüfen, wonach das Konto des Kunden (Abonnenten) durch Absenden von Zahlungsmitteilungeen (13) an die Computerstation (2, 14) belastet wird.

8. Intelligente Karte, SIM oder Äquivalent, genannt Mobiler Zahlungsteil (10, 39, 21, 42), für den Gebrauch wenigstens in dem System nach einem der vorhergehenden Ansprüche, wobei der mobile Zahlungsteil entweder im Terminal (1, 6) des Benützers vorgesehen oder in Verbindung mit dem Terminal (1, 6) benützt wird und der mobile Zahlungsteil wenigstens eines der folgenden Merkmale aufweist:
Einrichtungen zum Überweisen des erforderlichen Zahlungsbetrages von der Karte (SIM oder Äquivalent) an das Konto oder mobile Terminal (21, 25, 28, 30, 42) des Zahlungsempfängers;
Einrichtungen zum interaktiven Fragen und Antworten (11, 22, 31, 32) mit dem Benützer über das Interface und das Display (11) des mobilen Terminals (1, 6) des Benützers, und Einrichtungen für die interaktive Kommunikation (25, 29, 33, 34) über das Terminal (1, 8, 10) des Benützers mit wenigstens einem digitalen mobilen oder schnurlosen System (4, 5, 15, 24) und einer Computerstation (2, 14, 24) über die Dienstleistungen des Systems (4, 5) für kurze Datenmitteilungen;
Einrichtungen zum Speichern und Verarbeiten von Codes, welche von denjenigen der Abonnenten-Identitäten verschieden sind;
Einrichtungen zum Empfangen, Speichern, Anzeigen und Übertragen von kurzen, vom Terminal (1, 6) empfangenen Datenmitteilungen (11, 30, 34, 35) an die intelligente Karte (SIM oder Äquivalent 42, 21) und Einrichtungen zum Verarbeiten und Senden beliebiger kurzer Datenmitteilungen (13, 25, 33, 11) von dieser Karte über das Terminal an die Computerstation über den Kurzmitteilungsdienst für Daten;
Einrichtungen zum digitalen Sichern, Verschlüsseln und Entschlüsseln von Mitteilungen, welche über das Terminal (1, 6) mit einer Computerstation oder anderen Terminals ausgetauscht werden, unter Verwendung eines Sicherheitsalgorithmus und erforderlicher Codes;
Einrichtungen zum Anzeigen (11) dieser Mitteilungen für den Benützer über das Terminal (1, 6);
Einrichtungen zum Senden von Identitäten in Form von kurzen Datenmitteilungen über das Terminal (1, 6), wobei die Identitäten vorzugsweise von einem Dienstleistungsanbieter oder einer Bedienungsperson für die Computerstation oder einem Empfänger, wie dem Zahlungsempfänger, bestätigt werden;
Einrichtungen zum Empfangen und Speichern von Identitäten in kurzen Datenmitteilungen und zum Identifizieren einer Mitteilung und eines Benützers auf der Basis dieser Identitäten, welche Identitäten vorzugsweise von einem Dienstleistungsanbieter oder von einer Telephonbedienungsperson bestätigt werden;
eine Steuerungseinrichtung für ein benützerfreundliches Interface (11, 9) zum Anzeigen und Steuern von Menüs (11, 31, 32, 33) über das Terminal, welche es dem Benützer erlauben, einen Gegenstand (11) zu sehen, auszuwählen, einzugeben oder zu akzeptieren und Informationen zu senden und zu empfangen;
Einrichtungen zum Steuern und Anzeigen (11), Empfangen, Eingeben, Verarbeiten, Speichern und Senden von Rechnungen, kommerziellen Mitteilungen, Käufen, Zahlungen, Kontoinformationen, des Kontensaldos, des Kontostandes und anderer die Konten des Benützers betreffender Mitteilungen, sowie der Identifikationscodes (11, 18, 19, 25, 29, 30, 33, 34, 35) des Benützers über die Einrichtungen des Terminals (1, 6) und des Systems (4, 5) für kurze Datenmitteilungen;
Einrichtungen zum Bereitstellen von Befehlen zum Aktivieren wenigstens einer strukturierten und gespeicherten Anfrage oder eines Menüs (11, 33, 31, 32), welches auf dem Schirm (11) des mobilen Terminal angezeigt werder soll, und zum Senden und Empfangen von Information an die bzw. von der Computerstation (2) und anderen Terminals (6);
Einrichtungen zum Steuern und Verarbeiten des Anfrage- oder Menüformats (11), welches über das Terminal (1) des Benützers dargestellt und angezeigt (11) wird, womit dem Benützer gestattet wird, einen Gegenstand (11) auszuwählen oder einen Gegenstand (11) aus der bzw. an die Anfrage oder Menü (11) über ein Benützerinterfäce des Terminals einzugeben oder zu akzeptieren;
Einrichtungen, welche es dem das Terminal (1, 6) verwendenden Benützer gestatten, einen interaktiven Mitteilungsaustausch mit der mindestens einen Computerstation (2) durch Auswählen, Aktivieren und Absenden wenigstens eines Anfragecodes, einer Mitteilung, einer Nummer oder ihres Äquivalents (11, 33) an die Station zu führen, wobei die Codes und die Information (11, 32, 33) für den Benützer in einem strukturierten, benützerfreundlichen Format (11) dargestellt werden und die Codes und/oder Information unter benützerfreundlichen Befehlsnamen, wie "Sende den Kontostand, den Kontensaldo, die Rechnung" (11, 33) od. dgl., präsentiert werden und die Codes sich auf Kommerz- und Informationseinheiten beziehen, wie den Kontensaldo, den Kontostand, Bank-, Einzelhandels, Geschäfts-, Kaufs-, Rechnungszahlungs- und andere erforderliche Mitteilungen, welche auf der Station (2) oder durch sie zugänglich, zahlbar bzw. käuflich sind;
Einrichtungen zum Anpassen von Informationen, wie Rechnungen und anderen Informationen, in kleinere Teile und Kurzmitteilungen, und Einrichtungen zum Verarbeiten und Anzeigen von über den Kurzmitteilungsdienst erhaltener Information;
Einrichtungen zum Empfangen, Kombinieren und Senden kurzer Datenmitteilungen, welche aus einer langen Dateninformation oder mehreren Kurzmitteilungen herrühren;
Einrichtungen zum Unterteilen und Anordnen einer langen Dateninformation in eine erforderliche Anzahl von Kurzmitteilungen.

9. Verfahren in einem mobilen Echtzeitsystem, dem System wenigstens nach einem der vorhergehenden Ansprüche, für die Rechnungszahlung mobiler Benützer und zum Versehen der Benützer mit Einrichtungen zur Durchführung mobiler Kommerzgeschäfte, Bankgeschäfte, Handelsgeschäfte und zum Senden und Empfangen von Informationen, bei dem ein mobiles Terminal (1, 6) eines Benützers mit Einrichtungen, welche es dem Benützer gestatten, intelligente Karten (SIM oder ein Äquivalent 10, 39) in Verbindung mit dem Terminal zu verwenden, mit bzw. über wenigstens eine(r) entfernte(r) Computerstation (2, 14, 24) über ein digitales mobiles oder ein schnurloses Kommunikationssystem (4, 5) ohne Benutzung eines Datenmodems in Verbindung mit dem Terminal kommuniziert, **dadurch gekennzeichnet, daß** das Verfahren die folgenden Schritte umfaßt:
- einem das Terminal (1, 6) verwendenden Benützer zu gestatten, einen interaktiven Mitteilungsaustausch mit der Computerstation durch Auswählen, Aktivieren und Absenden wenigstens eines Anfragecodes, einer Mitteilung, einer Nummer oder ihres Äquivalents (11, 33) an die Computerstation zu führen, wobei die Codes und die Information (11, 33) alternativ entweder von der Computerstation an das Terminal gesandt werden oder sich der Benützer von dem Terminal aus oder dem Speicher seiner intelligenten Karte (SIM oder Äquivalent) Zutritt verschafft und sie für den Benützer in einem strukturierten und steuerbaren benützerfreundlichen Format (11, 33) angezeigt werden, wobei die Codes und/oder Information unter benützerfreundlichen Befehlsnamen wie "Sende den Kontostand, den Kontensaldo, die Rechnung" (11, 33) od. dgl., präsentiert werden und die Codes sich auf Kommerz- und Informationseinheiten beziehen, wie den Kontensaldo, den Kontostand, Bank-, Einzelhandels, Geschäfts-, Rechnungszahlungs-, Handel- u. dgl., welche von der Computerstation (2) oder durch sie zugänglich, zahlbar bzw. käuflich sind;
- Senden des Codes oder seines Äquivalents alternativ zusammen mit einem benützerbezogenen oder einem unterschiedlichen Code an eine relevante Computerstation (2, 14, 24) über ein mobiles oder schnurloses System (4, 5), wobei die vom mobilen Terminal an das System (4, 5, 15, 26) gesendeten Codes alternativ verschieden von denjenigen Codes sind, welche zwischen dem System und der Computerstation verwendet werden;
- beim Empfang des Anfragecodes durch die Computerstation wird von der Computerstation auf die Information in Echtzeit zugegriffen und die Information an das Terminal des Benützers gesandt und, erforderlichenfalls ein Konto belastet;
- Verarbeiten, Steuern und Anzeigen (11) der über den Schirm (11) des Terminals empfangenen Informationseinheiten im Terminal, und dem Benützer zu gestatten, die Information zu akzeptieren, auszuwählen, einzugeben, zu verarbeiten, zu speichern oder zu löschen oder sie zu anderen Terminals oder Computerstationen zu senden; und daß alternativ:
- Bank-, Handels- und andere Mitteilungen werden bei diesem Verfahren über einen direkten, kurzen Datenmitteilungsaustausch oder über Mitteilungsdienste des Kommunikationssystems (4, 5) an die bzw. von den bzw. über die Computerstationen durchgeführt, wobei die zwischen dem mobilen Terminal (1, 6), der intelligenten Karte (mobiler Zahlungsteil 10, 39, 21, 42) und den Computerstationen (2) ausgetauschten Mitteilungen, wann immer erforderlich, unter Benutzung eines Sicherheitsalgorithmus und beliebiger erforderlicher Codes verschlüsselt und gesichert werden.

10. Verfahren nach Anspruch 9, wobei das Verfahren so ausgebildet ist, daß es in mobilen Terminals (1, 6, 8, 41, 37) und einer entfernten Computerstation arbeitet, mit der die Terminals über ein digitales mobiles oder ein schnurloses Kommunikationssystem (4, 5) in Verbindung stehen, wobei die Computerstation und die Terminals der Benützer so ausgebildet sind, daß sie Datenmitteilungen senden und empfangen und verarbeiten, ohne irgend ein Datenmodem in Verbindung mit dem Terminal des Benützers zu verwenden, wobei das Verfahren des weiteren die folgenden Schritte umfaßt:
- die Terminals der Benützer oder die Computerstationen adaptieren und ordnen lange, in die Terminals oder Computerstationen eingegebene oder von diesen erhaltene Dateninformationen in Form von kleineren Teilen und eine entsprechende Anzahl von kurzen Datenmitteilungen;
- Senden der Mitteilungen in entsprechender Reihenfolge, eine nach der anderen oder alle auf einmal, über das mobile oder schnurlose Netz zur erforderlichen Computerstation oder zu den empfangenden Terminals;
- in den empfangenden Terminals oder Computerstationen werden empfangene Kurzmitteilungen so angeordnet und kombiniert, daß sie die Information bilden, wobei im Terminal die langen, in kurzen Teilen empfangenen Daten weiter verarbeitet und angeordnet werden, um über ein Display (11) des Terminals angezeigt zu werden, um es dem Benützer zu gestatten, die Daten zu sehen, zu speichern, zu steuern, zu verarbeiten und, nötigenfalls, weiterzusenden.

## Revendications

1. Système mobile de paiement en temps réel pour les paiements des factures des utilisateurs mobiles et/ou pour pourvoir les utilisateurs avec tous les moyens pour des affaires de banque, des affaires de commerce et d'industrie, et pour transmettre et recevoir des informations, le système utilisant les facilités d'un service de messages courts au moins d'un réseau de communication mobile sans fil ou d'un système de communication digital sans cordes (5) et un module d'identité de l'abonné/utilisateur (SIM ou équivalent 10, 21, 39, 42), ledit système comprenant
- au moins un terminal mobile (1, 6, 8, 37, 41) utilisant ledit module d'identité (10, 21, 39, 42) et comprenant des moyens d'introduction, de transmission, de réception, de manipulation et d'indication (11) d'informations, qui se réfèrent essentiellement, mais ne sont pas limitées à: des paiements de factures de l'abonné de téléphone ou de l'utilisateur dudit terminal mobile; le virement d'argent d'un compte de banque de l'abonné ou l'utilisateur aux autres comptes; la transmission et la réception d'au moins les messages de paiement (11, 13, 18, 19, 20, 25, 29, 33, 34, 35) ou des messages comprenants la balance de compte, le relevé de compte ou le mouvement au compte (33, 34, 35) de l'abonné de téléphone ou de l'utilisateur du terminal mobile (1, 6, 8, 37, 41) et la communication des messages se référants aux affaires de banque, de paiement et de commerce et d'autres (11);
- au moins une station d'ordinateur (2, 14, 24) disposée dans une banque (3) ou des autre places requises quelconques, ladite station d'ordinateur comprenant des moyens pour la communication directe des messages courts avec ledit terminal mobile ou par voie des moyens de message du réseau de communication (4, 5), et pour la transmission d'un montant de paiement à partir du compte de l'utilisateur du terminal mobile ou abonné de téléphone à un autre compte (17, 28), ou d'un compte d'un client, la information de compte duquel est introduite dans ledit terminal mobile, à un autre compte; et/ou pour la réception et la transmission de messages au sujet de la balance de compte, le relevé de compte ou le mouvement au compte (11, 33, 34, 35) de l'abonné ou l'utilisateur du terminal mobile, et pour la communication de messages (11) se référants aux affaires de banque, de paiement et/ou de commerce et d'autres;
- au moins un réseau de communication mobile sans fil (4, 15, 26) ou un système de communication digital sans cordes (5), par lequel ledit terminal mobile peut transmettre et recevoir à ou de ladite station d'ordinateur lesdits messages de paiement et/ou au moins des messages au sujet de la balance de compte, du relevé de compte ou du mouvement au compte de l'abonné ou l'utilisateur du terminal mobile, et pour la communication de messages (11) se référants aux affaires de banque, de paiement et/ou de commerce et des autres messages nécessaires.

2. Système mobile en temps réel selon la revendication 1, **caractérisé en ce que** des informations de factures, de banque, de commerce et de compte et des autres messages, menus et demandes se référants à ces affaires sont dans ledit système, à mesure qu'il est nécessaire, arrangées et indiquées (11, 33) pour l'utilisateur sur l'écran dudit terminal mobile (1, 6), pour rendre l'utilisateur capable de voir, d'accepter, de choisir et d'introduire un objet ou une information requise quelconque et de transmettre et de recevoir lesdits messages aux/des stations d'ordinateur et des autres terminaux, sans utiliser un modem de dates avec ledit terminal mobile, les messages communiqués entre ledit terminal mobile (1, 6), la carte intelligente (10, 21, 39, 30, 42, partie du paiement mobile) et les stations d'ordinateur (2) étant chiffrés et complètement protégés, s'il est nécessaire, en utilisant un algorithme de sécurité, et **en ce que** ledit système comprend en outre des moyens pour permettre à l'utilisateur en utilisant ledit terminal (1, 6) d'avoir une communication interactive de messages avec ladite station d'ordinateur en temps réel en transmettant au moins un code de demande, un message (11, 33) à ladite station d'ordinateur, lesdits codes et informations (11, 33) étant transmis par ladite station d'ordinateur au terminal ou bien étant accédés par l'utilisateur à partir dudit terminal ou son mémoire de la carte intelligente (SIM ou équivalent) et présentés à l'utilisateur dans un format (11, 33) structuré et agréable à l'utilisateur, lesdits codes et/ou informations étant présentés sous des noms de commande, comme "relevé de compte, balance de compte" (11, 33) ou similaires, et lesdits codes se référants au commerce et à des unités d'information, comme la balance de compte, le relevé de compte, des messages de banque, de commerce de détail, de l'industrie, des achats, de paiement de factures et des autres messages requis, accessibles et/ou achetables du/par les stations d'ordinateur, et des moyens pour transmettre la information (11, 34) demandée audit terminal.

3. Station d'ordinateur pour l'utiliser au moins dans un système selon les revendications 1 et 2, ladite station d'ordinateur (2, 14, 24) comprenant en outre:
des moyens de communication avec le terminal mobile (1, 6) de l'utilisateur par voie d'un réseau mobile (4) ou par voie d'un système digital sans cordes (5) et tous les moyens pour la communication avec et/ou sans fil et au moins un des suivants:
des moyens pour recevoir et mémoriser les montants de paiement nécessaires, transmis par ledit terminal mobile (1, 6), aux comptes à utiliser au moins pour des factures de l'utilisateur mobile;
des moyens de contrôle, de transmission, de réception, de mémorisation et de manipulation d'au moins un message, d'une demande, d'un menu (11, 33) structurés de manière agréable à l'utilisateur pour mettre l'utilisateur en état de choisir un objet, d'introduire ou d'accepter un objet et de transmettre et recevoir l'information requise, ladite demande ou ledit menu, dans une forme d'exécution, ayant au moins un panneau de demande et de réponse pour la réponse/introduction et/ou acceptation de l'utilisateur;
des moyens de réception, de contrôle et de traitement, de mémorisation et de transmission de factures, de paiements, d'information de compte de l'utilisateur mobile, de la balance de compte, du relevé de compte ou du mouvement au compte et des messages d'affaires de banque et de commerce (11, 18, 19, 25, 29, 30, 33, 34, 35) aux/des terminaux de l'utilisateur mobile par voie des messages courts directes de dates (SMS) ou par voie des moyens de message d'un système de communication digital mobile sans fil (4) ou sans cordes (5) pour transmettre, recevoir, manipuler et indiquer (11) lesdits messages dans un format agréable à l'utilisateur (11) pour rendre l'utilisateur capable de choisir, d'accepter ou d'introduire un objet et d'exécuter une transaction, d'appeler sélectivement le compte ou des autres informations requises;
des moyens pour chiffrer et pour protéger digitalement des messages communiqués entre lesdits terminaux (1, 6), la partie de paiement mobile (10, 21, 39, 30, 42) et les stations d'ordinateur en utilisant un algorithme de sécurité et des codes requis;
des moyens pour recevoir, mémoriser et réviser les identités des utilisateurs, lesdites identités étant confirmées alternativement par un offrant de services ou opérateur;
des comptes des utilisateurs ou des moyens pour communiquer avec ces comptes de banque des utilisateurs et des moyens pour réviser, charger/débiter lesdits comptes (17) ou pour virer les montants de paiement requis d'un compte à l'autre en temps réel, à mesure que le temps et un appel ou service avancent, pour le paiement de factures des utilisateurs mobiles;
des moyens de contrôle et de révision des comptes des utilisateurs en temps réel et des moyens d'information de l'utilisateur sur la situation des comptes n'importe quand nécessaire;
des moyens pour charger des comptes de l'utilisateur ou pour virer des paiements d'un compte à l'autre, quand une facture ou un ordre de paiement et a été reçu ou un message a été accepté à partir dudit terminal mobile par voie d'un message court de dates;
des moyens de révision des comptes des utilisateurs en temps réel ou périodiquement pour charger lesdits comptes et/ou pour transmettre des messages se référants à la situation de compte aux terminaux des utilisateurs;
des moyens de communication interactive des messages courts de dates avec le terminal mobile et la carte intelligente (SIM ou équivalent) de l'utilisateur, et des moyens de transmission et de réception des paiements au/du terminal mobile (25, 28) et à/de la carte intelligente, la partie de paiement mobile (30, 42) de l'utilisateur par voie dudit système mobile ou sans cordes (4, 5);
des moyens pour adapter des factures, des messages de banque, des balances de compte, des relevés de compte et des autres dates requises en forme des parties plus petites pour la transmission aux terminaux mobiles et portables de l'utilisateur pour rendre lesdits terminaux (1, 6) capables de recevoir, traiter et indiquer (11) lesdits messages sans utiliser un modem de dates en connexion avec ledit terminal;
des moyens pour combiner des messages courts de dates et des moyens pour subdiviser et arranger des informations longues de dates, comme des factures et des informations de compte, en forme des parties plus petites, un nombre requis de messages courts, lesdits messages étant transmis aux terminaux des utilisateurs par voie d'un réseau digital mobile sans fil (4) ou d'un système digital sans cordes (5) dans un ordre approprié, l'un après l'autre ou tous à la fois, pour rendre les terminaux recevant capable de recevoir et de combiner lesdits messages sans utiliser un modem de dates;
des moyens de réception, de mémorisation et de transmission des messages courts de dates, résultants de la subdivision d'une information plus longue de dates, aux/des terminaux mobiles des utilisateurs dans un ordre approprié, l'un après l'autre ou tous à la fois;
des moyens de surveillance des identités et codes des utilisateurs;
des moyens d'identification des utilisateurs et de communication basée aux identités des utilisateurs mobiles ou aux codes différents transmis par ledit terminal mobile ou par un opérateur mobile ou un offrant des services;
des moyens de notification des messages de dates reçus au compte de l'utilisateur ou d'un changement fait dans les comptes d'un utilisateur par transmission d'un message court au terminal mobile (29, 19) de l'utilisateur;
des moyens pour transmettre périodiquement des informations de compte de l'utilisateur, comme la balance de compte ou le relevé de compte (35) et des autres messages audit terminal de l'utilisateur par voie des messages courts de dates;
des moyens pour rendre l'utilisateur, qui utilise ledit terminal (1, 6), capable d'échanger des messages interactifs avec ladite station d'ordinateur en temps réel par transmission d'au moins un code de demande, un message (11, 33) à ladite station d'ordinateur, lesdits codes et informations (11, 33) étant transmis par ladite station d'ordinateur audit terminal ou bien étant introduits dans le terminal par l'utilisateur ou étant accédés à partir dudit terminal ou son mémoire de la carte intelligente par l'utilisateur, et étant indiqués pour l'utilisateur dans un format structuré (11) et agréable à l'utilisateur, lesdits codes et/ou lesdites informations étant présentés alternativement sous des noms de commande, comme "relevé de compte, balance de compte" (11, 33) ou similaire, lesdits codes se référants au commerce ou des unités d'information, comme la balance de compte, le relevé de compte, des messages d'affaires de banque, de commerce de détail, de l'industrie, des achats, des paiements de factures et des autres messages nécessaires, accessibles et/ou achetables des/par les stations d'ordinateur, et des moyens pour transmettre ladite information demandée (11, 34) audit terminal;
des moyens pour charger à la base desdits codes de demandes et l'information ou l'achat prévu à cette occasion.

4. Terminal mobile pour l'utiliser au moins dans un système selon les revendications 1 et 2, ledit terminal mobile comprenant de plus au moins un des moyens suivants:
des moyens de messages en temps réel avec et par voie d'un réseau digital mobile sans fil (4) et avec ou par voie d'un système/d'une station digital sans cordes (5) avec lesdites stations d'ordinateur;
des moyens de messages interactifs en temps réel avec lesdites stations d'ordinateur;
des moyens pour rendre l'utilisateur capable d'acheter, de faire du commerce et de payer des factures par voie des moyens de messages courts de dates dudit système sans cordes ou mobile (4, 5) sans utiliser un modem de dates avec ledit terminal;
des moyens pour contrôler et indiquer (11), recevoir, introduire, traiter, mémoriser et transmettre des factures, des achats, des paiements et des messages de commerce, des informations de compte, des balances de compte, des relevés de compte et les mouvements au compte ou des autres messages se référants aux comptes des utilisateurs, ainsi que les codes d'identification (11, 18, 19, 25, 29, 30, 33, 34, 35) des utilisateurs par des messages directs courts des dates ou par voie des moyens de message dudit système mobile ou sans cordes (4, 5);
des moyens pour chiffrer et pour protéger digitalement les messages communiqués entre ledit terminal (1, 6) et lesdites stations d'ordinateur (2) en utilisant un algorithme de sécurité et les codes nécessaires;
des moyens pour recevoir et mémoriser des identités dans des messages courts de dates et pour identifier un message et/ou l'utilisateur à la base desdites identités, lesdites identités étant préférablement confirmées par un offrant des services ou un opérateur;
des moyens pour charger/débiter ladite carte intelligente (SIM ou équivalent), utilisée dans ledit terminal ou en connexion avec ledit terminal, en temps réel, à mesure que le temps et un appel ou service avancent, pour le paiement de factures des utilisateurs mobiles;
des moyens pour lire les codes des utilisateurs, le paiement et/ou crédit des utilisateurs ou autres informations requises de ladite carte intelligente (SIM ou équivalent) et pour transmettre lesdites informations par voie d'un service de messages courts de dates dudit réseau (4, 5) à ladite station (2) pour charger, débiter et les affaires des factures et du commerce de l'utilisateur;
des moyens de transmission (25), de réception (30), de traitement et de mémorisation du paiement requis dans la carte intelligente (SIM ou équivalent) de l'utilisateur, la partie de paiement mobile (10, 21, 42);
des moyens pour rendre les utilisateurs (6) capable de faire des messages, des achats, du commerce et
des paiements de factures dépendant d'un local (5) par transmission et réception des messages par voie d'un système de communication digital sans cordes (5) localisé dans un local, comme un restaurant, un point de vente, une boutique ou un autre place quelconque ou par voie d'un réseau mobile (4);
des moyens de réception des informations, comme des factures, des informations de compte et des autres informations nécessaires, qui sont adaptées aux messages courts de dates, et des moyens de contrôle, de traitement et d'indication desdites informations pour l'utilisateur;
des moyens pour subdiviser et arranger des informations longues de dates en forme des parties plus petites, le nombre nécessaire des messages courts de dates, et des moyens de transmission desdits messages par voie des moyens de message d'un système mobile ou sans cordes (4, 5) dans un ordre approprié, l'un après l'autre ou tous à la fois, pour rendre les stations d'ordinateur (2) ou les terminaux recevants capables de recevoir et de combiner lesdits messages;
des moyens pour arranger, recevoir et transmettre des messages courts résultants de la subdivision d'une information plus longue de dates dans un ordre approprié, l'un après l'autre ou tous à la fois, à/de ladite station d'ordinateur;
des moyens pour combiner et indiquer (11) lesdits messages subdivisés;
un dispositif de contrôle d'un interface (11, 9) agréable à l'utilisateur pour indiquer et contrôler des menus (11, 31, 32, 33) permettants à l'utilisateur de voir, de choisir, d'introduire ou d'accepter un objet (11) et de transmettre et recevoir des informations aux/des stations d'ordinateur à la base du temps réel;
des moyens pour contrôler et indiquer (11), pour transmettre, recevoir, mémoriser et traiter au moins un message, une demande ou un menu, qui sont structurés, comme un menu de factures, dans un format (11) agréable à l'utilisateur, permettants à l'utilisateur de voir, de choisir, d'introduire ou d'accepter un objet (11, 33), cette demande ou ce menu (11), selon une forme d'exécution, ayant au moins un panneau de question et de réponse à être, n'importe quand il est nécessaire, répondu, introduit et/ou accepté par l'utilisateur, et les moyens pour accéder et indiquer lesdites demandes ou menus (11) de ladite carte intelligente (SIM ou équivalent) ou ladite station d'ordinateur (2);
des moyens pour permettre audit utilisateur utilisant ledit terminal (1, 6) de faire des messages interactifs avec au moins une station d'ordinateur (2) d'un offrant de services en choisissant, activant et
transmettant au moins un code de demande, un message, un numéro ou son équivalent (11, 33) à ladite station, lesdits codes et informations (11, 32, 33) étant indiqués à l'utilisateur dans un format (11) structuré, agréable à l'utilisateur et lesdits codes et/ou informations étant présentés sous des noms de commande agréables à l'utilisateur, comme "transmets le relevé de compte, la balance de compte, la facture" (11, 33) ou similaire, lesdits codes se référants au commerce et aux unités d'information, comme la balance de compte, le relevé de compte, des messages en affaires de banque, de commerce de détail, de l'industrie, des achats, de paiement de factures et des autres messages nécessaires, qui sont accessibles, payables, achetables à partir de/par ladite station;
des moyens de display desdites demandes, menus (11), et de transmission et de réception desdits messages (11) par voie d'un message direct court de dates ou bien par voie des moyens de message dudit système de communication (4, 5) sans utiliser un modem de dates en connexion avec ledit terminal pour transmettre, recevoir, traiter et indiquer (11) lesdits messages (11);
un dispositif de lecture (36) alternative de cartes intelligentes intégré dans ou utilisé avec ledit terminal mobile (1), ledit dispositif de lecture étant utilisé alternativement pour lire une SIM ou équivalent (10, 39) ou utilisé comme dispositif de lecture de cartes additionnel à l'autre dispositif de lecture de cartes intelligentes (10) dudit terminal;
des moyens de lecture des identités des utilisateurs, des codes et des paiements à partir de ladite carte intelligente (SIM ou équivalent) et de transmission à ladite station d'ordinateur en forme des messages courts de dates;
des moyens pour introduire, recevoir et transférer lesdits messages courts de dates à ladite carte intelligente (SIM ou équivalent) et des moyens de contrôle des commandes desdites cartes intelligentes pour indiquer des demandes, des menus et des messages d'information de paiement mémorisés dans ladite carte intelligente;
des moyens de lecture d'une information requise de ladite carte intelligente pour chiffrer ledit paiement et des autres messages en utilisant un algorithme de sécurité, lesdits messages étant communiqués entre ledit terminal et une station d'ordinateur ou des autres terminaux;
des moyens pour virer le montant de paiement requis de ladite carte intelligente (SIM ou équivalent) de l'utilisateur, de la partie de paiement mobile, au compte ou terminal mobile du destinataire (21, 25, 28, 30, 42);
des moyens pour utiliser et traiter des codes, qui diffèrent de ceux des identités des abonnés, lesdits codes différents étant mémorisés dans ladite carte intelligente ou dans le terminal, ou sont introduits par l'utilisateur et utilisés comme un code d'identification;
des moyens pour utiliser et traiter des codes, qui diffèrent de ceux des identités des abonnés, pour communiquer et transmettre et recevoir des informations par voie des moyens de messages courts dudit terminal et dudit système de communication (4, 5) sans utiliser un modem de dates en connexion avec ledit terminal (1).

5. Système mobile selon une quelconque des revendications précédentes, **caractérisé en ce que** les paiements ou les factures d'un abonné de téléphone mobile ou utilisateur sont payés par introduction de l'identité et des codes de l'abonné dans ledit terminal mobile (1, 6, 8, 41) ainsi que l'information de facture comprenant le numéro de compte du destinataire, le montant de paiement, la date d'échéance et le numéro de référence de la facture dans la partie de paiement mobile (10, 21) dudit terminal mobile, et par transmission des messages de paiement (13, 25) à ladite station d'ordinateur (2, 14, 24).

6. Système mobile de paiement (43) selon une quelconque des revendications précédentes, **caractérisé en ce que** ledit au moins un terminal mobile (1, 6) comprend tous les moyens pour transmettre et recevoir des messages de paiement à ou de ladite station d'ordinateur (2); et **en ce que** ledit terminal mobile comprend au moins une des caractéristiques suivantes:
- une partie de paiement mobile (10, 21) pour traiter l'information de paiement (11, 22, 31, 32), qui est alternativement introduite par l'utilisateur dans ledit terminal mobile ou reçue ou surveillée par ledit terminal, et **en ce que** lesdites informations de paiement sont gardés dans le mémoire dudit terminal mobile ou de ladite partie de paiement mobile, et sont transmises à ladite station d'ordinateur, n'importe quand il est nécessaire;
- des moyens, qui reçoivent un message (18, 19, 29) de ladite station d'ordinateur indiquant que le paiement ou bien le virement du montant de paiement nécessaire du compte du payeur à celui-ci du destinataire a été accepté et/ou effectué ou non;
- des moyens, qui permettent à l'utilisateur d'introduire plus d'une seule information de paiement ou de facture dans la partie de paiement mobile (10, 21, 39), et que toutes les informations de paiement nécessaires (13, 25) sont transmises à la station d'ordinateur, après que le numéro de téléphone de ladite station d'ordinateur (2, 14, 24) ait été composé ou choisit (12, 23) manuellement ou bien automatiquement;
- des moyens pour permettre audit terminal de transmettre des informations de paiement (13, 25) traitées dans la partie de paiement mobile (10, 12, 39) à la station d'ordinateur (14, 24) et de recevoir les messages de paiement nécessaires (18, 19, 29) de ladite station d'ordinateur en utilisant les Services de Messages Courts (SMS) du réseau de communication sans fil (4, 5, 15, 26); et/ou
- ladite information d'un abonné d'un terminal mobile est alternativement transmise à partir du réseau d'exploitation de téléphone (4, 5, 15, 26) à la station d'ordinateur (2, 14, 24); et/ou
- ledit terminal mobile, selon une forme d'exécution, comprend une imprimante de fiche de chargement (20, 38), qui imprime toutes les informations de paiement et l'information reçue de la station d'ordinateur pour l'utilisateur dudit terminal mobile; et/ou
- ladite partie de paiement mobile (10, 21, 39) est formée pour être incluse dans toute sorte quelconque de téléphone mobile digital ou analogue (1, 6), qui est capable de travailler dans des systèmes de communication cellulaires.

7. Système mobile de paiement selon une quelconque des revendications précédentes, **caractérisé en ce que** ladite station d'ordinateur (2, 14, 24) comprend des moyens par lesquelles, après recevoir un message de paiement (13, 25) à partir dudit terminal mobile (1, 6, 8, 41), le compte du payeur (17, 28) est révisé et chargé selon le montant de paiement reçu dudit terminal mobile, et puis un message (18, 19, 29) est transmise audit terminal mobile (8, 41, 37) pour indiquer, que ce paiement a été accepté et/ou effectué ou pour indiquer, qu'il n'y a pas de crédit suffisant sur le compte du payeur; et **en ce que** ledit système comprend au moins une des caractéristiques suivantes:
- ladite station d'ordinateur (2, 14, 24) comprend des moyens, qui reçoivent ou transmettent des messages de paiement (11, 18, 19, 29, 30) ou des autres messages d'affaires de banque et de commerce (11, 33, 34, 35) audit terminal mobile (1, 6, 8, 41) par voie des réseaux de communication fixes ou bien digitaux sans fil (4, 5, 7, 15, 16, 26, 27) ou seulement par voie d'un réseau de communication mobile sans fil (15, 26);
- ladite station d'ordinateur (2, 14, 24) comprend des moyens, qui reçoivent l'information et l'identité du payeur par un opérateur du téléphone du payeur ou bien par un offrant des services par voie d'un réseau de communication mobile sans fil (4, 15, 26), quand le payeur transmet des messages courts (13, 25) à ladite station d'ordinateur (2, 14, 24) ou à partir du terminal mobile du payeur (1, 6, 8, 41); et **en ce que** l'information du payeur reçue par l'opérateur du téléphone du payeur ou par l'offrant des services ou dudit terminal mobile comprend l'information ou identité de l'abonné payant ou des autres informations nécessaires quelconques;
- ladite station d'ordinateur comprend des moyens, qui surveillent l'informations de l'abonné/utilisateur ou des autres identités, qui ont été reçues de l'opérateur de téléphone de l'abonné/utilisateur ou de l'offrant de services ou du terminal mobile, et virent le montant de paiement nécessaire du compte de l'abonné/utilisateur à un autre compte requise quelconque à la base desdites informations de l'abonné/utilisateur ou d'une autre identité et du numéro de compte;
- lesdites informations de l'abonné/utilisateur ou d'identité sont confirmées dans ce système par l'opérateur du téléphone de l'abonné ou par l'offrant des services (4, 5, 15, 26), et lesdites informations confirmées sont transmises à ladite station d'ordinateur (2, 14, 24), dans laquelle l'identité de l'abonné est révisée (17, 28) et, à la base ceci, le message de paiement reçu (13, 25) peut être accepté, et un message (18, 29) est transmis audit terminal mobile (1, 6, 8, 41), que le paiement a été effectué;
- ladite station d'ordinateur (2, 14, 24) comprend des moyens, qui traitent, transmettent ou reçoivent des messages de paiement (11, 13, 18, 19, 25, 29, 30, 33, 34, 35) aux ou à partir des terminaux mobiles (1, 6, 8, 41, 37) du payeur ainsi que du destinataire;
- ladite station d'ordinateur (2, 14, 24) est équipée de tous les moyens pour transmettre et recevoir des messages par voie d'un réseau de communication mobile sans fil ou d'un système digital sans cordes (5) quelconques audit ou à partir dudit terminal mobile (1, 6, 8, 41, 37);
- ladite partie de paiement mobile (10, 21, 39) comprend des moyens, par lesquels l'utilisateur est prié d'introduire toutes les informations de paiement (11), comme le numéro de compte du payeur, le numéro de référence de la facture, la date d'échéance de la facture, le montant de paiement et des autres informations requises, s'il est nécessaire;
- ladite partie de paiement mobile (10, 21, 39) comprend des moyens, qui demande l'utilisateur dudit terminal mobile "quelques autres paiements ?" (13), après avoir reçu toutes les informations sur le paiement ou une facture par l'utilisateur par voie de l'interface (9) de l'utilisateur, pour indiquer, que l'utilisateur veut payer une autre facture ou veut faire un autre paiement;
- ledit terminal mobile (1, 6, 8, 41) est utilisé pour payer les factures d'un abonné d'un téléphone mobile en introduisant, alternativement, l'identité et les codes de chaque abonné dans ledit terminal mobile ou en utilisant l'interface (9) de l'utilisateur du terminal mobile ou la carte SIM (ou équivalent) (10, 39) et un dispositif de lecture de cartes (10, 36);
- les codes des abonnés d'un téléphone mobile sont différent des identités desdites abonnés; et **en ce que** lesdites codes des abonnés peuvent être inclus dans la carte (39) SIM (ou équivalent) des abonnés ainsi que dans ladite station d'ordinateur (2), qui et alternativement disposé dans la banque (3);
- ledit terminal mobile (1, 6) est utilisé pour charger des clients dans les affaires de commerce de détail ou de l'industrie en introduisant la carte (10, 39) SIM (ou équivalent) de téléphone du client dans ledit terminal mobile (1, 6) et en utilisant les identités des abonnés de téléphone ou des codes différents de chaque client comme identification pour le paiement;
- après que ladite carte (10, 39) SIM (ou équivalent) du client ait été introduite dans ledit terminal mobile (1, 6, 8), ledit terminal mobile est relié au réseau de communication mobile sans fil (4, 15) pour réviser l'identité de l'abonné, après quoi le compte du client (abonné) est chargé en transmettant des messages de paiement (13) à la station d'ordinateur (2, 14).

8. Carte intelligente, SIM ou équivalent, appelée Partie de Paiement Mobile (10, 39, 21, 42) pour l'utiliser au moins dans un système selon une quelconque des revendications précédentes, ladite partie de paiement mobile étant incluse dans ledit terminal (1, 6) de l'utilisateur ou bien utilisée en connexion avec ledit terminal (1, 6), ladite partie de paiement mobile comprenant au moins une des caractéristiques suivantes:
des moyens de virement du montant de paiement requis de ladite carte (SIM ou équivalent) au compte ou terminal mobile (21, 25, 28, 30, 42) du destinataire ;
des moyens pour demander-répondre (11, 22, 31, 32) interactivement avec l'utilisateur par voie de l'interface et le display (11) du terminal mobile (1, 6) de l'utilisateur, et des moyens de communication interactive (25, 29, 33, 34) par voie dudit terminal (1, 8, 10) de l'utilisateur avec au moins un système digital mobile ou sans cordes (4, 5, 15, 24) et une station d'ordinateur (2, 14, 24) par les services de message court de dates dudit système (4, 5);
des moyens de mémorisation et de traitement des codes, qui diffèrent de ceux des identités des abonné;
des moyens de réception, de mémorisation, de display et de transfert des messages courts de dates (11, 30, 34, 35), reçus par ledit terminal (1, 6), à ladite carte intelligente (SIM ou équivalent 42, 21) et des moyens de traitement et de transmission des messages courts de dates (13, 25, 33, 11) de ladite carte par voie dudit terminal à ladite station d'ordinateur par voie des moyens de messages courts de dates;
des moyens pour protéger digitalement, chiffrer et déchiffrer des messages communiqués par ledit terminal (1, 6) avec une station d'ordinateur ou des autres terminaux en utilisant un algorithme de sécurité et des codes nécessaires;
des moyens de display (11) desdits messages pour l'utilisateur par ledit terminal (1, 6)
des moyens de transmission des identités en forme de messages courts de dates par ledit terminal (1, 6), lesdites identités étant préférablement confirmées par un offrant de services ou un opérateur à ladite station d'ordinateur ou un récepteur, comme un destinateur;
des moyens de réception et de mémorisation des identités en forme de messages courts de dates et
d'identification d'un message et d'un utilisateur à la base desdites identités, lesdites identités étant préférablement confirmées par un offrant de services ou un opérateur;
un dispositif de contrôle d'un interface (11, 9) agréable à l'utilisateur pour indiquer et contrôler des menus (11, 31, 32, 33) par voie dudit terminal, permettants à l'utilisateur de voir, de choisir, d'introduire ou d'accepter un objet (11) et de transmettre et recevoir des informations;
des moyens de contrôle et de display (11), de réception, d'introduction, de traitement, de mémorisation et de transmission des factures, des messages de commerce, des achats, des paiements, des informations de compte, de la balance de compte, du relevé de compte et des autres messages se référants aux comptes de l'utilisateur et aux codes d'identification de l'utilisateur (11, 18, 19, 25, 29, 30, 33, 34, 35) par voie des moyens de messages courts de dates dudit terminal (1, 6) et dudit système (4, 5);
des moyens pour arranger des commandes pour activer au moins une demande ou un menu (11, 33, 31, 32) structurés et mémorisés à être indiqués sur l'écran (11) dudit terminal mobile, et pour transmettre et recevoir des informations à/de ladite station d'ordinateur (2) et des autres terminaux (6);
des moyens de contrôle et de traitement desdites formats de demande ou de menu (11) surveillés et
indiqués (11) par ledit terminal (1) de l'utilisateur permettants à l'utilisateur de choisir un objet (11), ou d'introduire ou d'accepter un objet (11) de/à ladite demande ou dudit/audit menu (11) par un interface de l'utilisateur dudit terminal;
des moyens pour permettre audit utilisateur de faire des messages interactifs en utilisant ledit terminal (1, 6) avec ladite au moins une station d'ordinateur (2) en choisissant, activant et transmettant au moins un code de demande, un message, un numéro ou son équivalent (11, 33) à ladite station, lesdits codes et informations (11, 32, 33) étant indiqués à l'utilisateur dans un format (11) structuré, agréable à l'utilisateur, et lesdits codes et/ou informations étant présentés sous des noms de commande agréables à l'utilisateur, comme "transmets le relevé de compte, la balance de compte, la facture" (11, 33) ou similaire, lesdits codes se référant au commerce et aux unités d'information, comme la balance de compte, le relevé de compte, des messages en affaires de banque, de commerce de détail, de l'industrie, des achats, des paiement de factures et des autres messages nécessaires, qui sont accessibles, payables, achetables à partir de/par ladite station (2);
des moyens pour adapter des informations, comme des factures ou des autres informations, en forme des parties plus petites et des messages courts, et des moyens de traitement et de display les informations reçues par voie des messages courts;
des moyens de réception, de combinaison et de transmission des messages courts de dates provenants d'une information longue de dates ou plusieurs messages courts;
des moyens pour subdiviser et arranger des informations longues de dates en le nombre nécessaire des messages courts de dates.

9. Méthode dans un système mobile en temps réel, ledit système étant au moins selon l'une quelconque des revendications précédentes, pour le paiement des factures des utilisateurs mobile et pourvoyant les utilisateurs des moyens pour effectuer des affaires de commerce, de banque, d'industrie, et pour transmettre et recevoir des informations, dans laquelle un terminal mobile (1, 6) d'un utilisateur, qui comprend des moyens pour permettre à l'utilisateur d'utiliser des cartes intelligentes (SIM ou équivalent 10, 39) en connexion avec ledit terminal, communique avec/par au moins une station d'ordinateur éloignée (2, 14, 24) par voie d'un système de communication digital mobile ou sans cordes (4, 5) sans utiliser un modem de dates en connexion avec ledit terminal, **caractérisée en ce que** ladite méthode comprend les étapes suivantes:
- permettre à un utilisateur, en utilisant ledit terminal mobile (1, 6), d'avoir un échange interactive de messages en temps réel avec ladite station d'ordinateur en choisissant, activant et transmettant au moins un code de demande, un message, un numéro ou son équivalent (11, 33) à ladite station d'ordinateur, lesdits codes et informations (11, 33) étant transmis alternativement par ladite station d'ordinateur audit terminal ou accédés par l'utilisateur à partir dudit terminal ou à partir du mémoire de sa carte intelligente (SIM ou équivalent) et indiqués (11) à l'utilisateur dans un format (11) structuré et contrôlable, agréable à l'utilisateur (11, 33), et lesdits codes et/ou informations étant présentés sous des noms de commande agréables à l'utilisateur, comme "transmets le relevé de compte, la balance de compte, la facture" (11, 33) ou similaire, lesdits codes se référant au commerce et aux unités d'information, comme la balance de compte, le relevé de compte, les affaires de banque, de commerce de détail, de l'industrie, de paiement de factures et de commerce et similaires, qui sont accessibles, payables, achetables à partir de/par ladite station (2) d'ordinateur;
- transmettre alternativement ledit code ou son équivalent ensemble avec ledit code se référant à l'utilisateur ou avec un code différent à la station d'ordinateur relevante (2, 14, 24) par voie un système mobile ou sans cordes (4, 5), et **en ce que** lesdits codes, transmis à partir dudit terminal mobile audit système (4, 5, 15, 26), sont alternativement différent desdites codes utilisés entre ledit système et ladite station d'ordinateur;
- accéder ladite information en temps réel de ladite station d'ordinateur, quand ledit code de demande a été reçu par ladite station d'ordinateur, et transmettre ladite information audit terminal de l'utilisateur et, s'il est nécessaire, charger un compte;
- traiter, contrôler et indiquer (11) dans ledit terminal lesdites unités d'information reçues par voie de l'écran dudit terminal (11), et permettre à l'utilisateur d'accepter, de choisir, d'introduire, de traiter, de conserver ou d'effacer ou de transmettre ladite information aux autres terminaux ou stations d'ordinateur; et **en ce qu'**alternativement:
- lesdits messages de banque, de commerce et autres messages sont effectués dans ladite méthode par la communication directe des messages courts de dates ou par voie des moyens de message du système de communication (4, 5) aux/à partir des ou par lesdites stations d'ordinateur, et **en ce que** lesdites messages communiqués entre ledit terminal mobile (1, 6) ou la carte intelligente (partie de paiement mobile 10, 39, 21, 42) et les stations d'ordinateur (2) sont chiffrés et protégés en utilisant un algorithme de sécurité et des codes nécessaires, n'importe quand il se pose la nécessité.

10. Méthode selon la revendication 9, ladite méthode étant formée à travailler dans des terminaux mobile (1, 6, 8, 41, 37) des utilisateurs et une station d'ordinateur éloignée, avec laquelle lesdits terminaux communiquent par voie d'un système de communication digital mobile ou sans cordes (4, 5) ladite station d'ordinateur et lesdits terminaux des utilisateurs étant formés à transmettre et recevoir et traiter des messages de dates sans utiliser un modem de dates en connexion avec ledit terminal de l'utilisateur, la méthode comprenant en outre les étapes suivantes:
- lesdits terminaux des utilisateurs ou lesdites stations d'ordinateur adaptent et arrangent des informations longues de dates, qui sont introduites dans lesdits ou reçues desdits terminaux ou sont introduites dans lesdites ou reçues desdites stations d'ordinateur, en forme des parties plus petites et un nombre nécessaire des messages courts de dates;
- transmettre lesdits messages dans un ordre approprié, l'un après l'autre ou tous à la fois, par voie dudit réseau mobile ou sans cordes aux stations d'ordinateur ou terminaux recevants requis;
- dans lesdits terminaux ou stations d'ordinateur recevants, les messages courts reçus sont arrangés et combinés pour former ladite information, lesdites dates longues, reçues en forme des parties plus petites dans ledit terminal, sont traitées et arrangées ultérieurement à être indiquées par un display (11) dudit terminal pour permettre à l'utilisateur de voir, de mémoriser, de contrôler, de traiter et, s'il est nécessaire, de retransmettre lesdites dates.
